# EUROPEAN PATENT APPLICATION

(11) **EP 4 773 663 A1**
(43) Date of publication of application: **08.07.2026**
(21) Application number: 24916063.1
(22) Date of filing: 12.01.2024
(51) Int. Cl.: H04W 28/02

(54) **DATA TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); ZHANG, Yi, Dongguan, Guangdong 523860 (CN)
(74) Representative: Taor, Simon Edward William
(86) International application number: PCT/CN2024/071929
(87) International publication number: WO 2025/147990

(57) **Abstract**

The present application relates to the technical field of communications, and discloses a data transmission method and apparatus, a device, and a storage medium. The method comprises: when a first constraint condition is satisfied, executing at least one of downlink data receiving, uplink data sending, and downlink control channel monitoring within a first time period, wherein the first time period is a time period related to measurement. The method enables a terminal device to not interrupt data transmission within the first time period on the basis of the first constraint condition, thereby ensuring the continuity of data transmission.

## Description

### TECHNICAL FIELD

Embodiments of the present disclosure relate to the field of communications technologies, and in particular, to a data transmission method, apparatus, device, and storage medium.

### BACKGROUND

In Extended Reality (XR) services, due to high requirements for delay and reliability of data transmission, it is necessary to ensure the continuity of data transmission under such services as much as possible.

In related technologies, a terminal device interrupts data transmission within a cell during measurement, that is, data transmission is not continuous. In such a case, how to preferentially ensure the continuity of data transmission is a technical problem to be solved.

### SUMMARY

Embodiments of the present disclosure provide a data transmission method, apparatus, device, and storage medium. The technical solutions are as follows:
In one aspect, an embodiment of the present disclosure provides a data transmission method, performed by a terminal device, including an operation of performing, within a first time period, at least one of: receiving downlink data, transmitting uplink data, or monitoring a downlink control channel, in a case where a first constraint condition is satisfied, where the first time period is a time period related to measurement.

In another aspect, an embodiment of the present disclosure provides a data transmission method, performed by a network device, including an operation of performing, within a first time period, at least one of: transmitting downlink data to a terminal device, receiving uplink data transmitted by the terminal device, or transmitting a downlink control channel to the terminal device, in a case where a first constraint condition is satisfied, where the first time period is a time period related to measurement of the terminal device.

In another aspect, an embodiment of the present disclosure provides a data transmission apparatus, including a performing module, configured to perform, within a first time period, at least one of: receiving downlink data, transmitting uplink data, or monitoring a downlink control channel, in a case where a first constraint condition is satisfied, where the first time period is a time period related to measurement.

In another aspect, an embodiment of the present disclosure provides a data transmission apparatus, including a performing module, configured to perform, within a first time period, at least one of: transmitting downlink data to a terminal device, receiving uplink data transmitted by the terminal device, or transmitting a downlink control channel to the terminal device, in a case where a first constraint condition is satisfied, where the first time period is a time period related to measurement of the terminal device.

In another aspect, an embodiment of the present disclosure provides a communication device, including:
a processor;
a transceiver connected to the processor;
a memory configured to store executable instructions of the processor;
wherein the processor is configured to load and execute the executable instructions to implement the data transmission method described above.

In another aspect, an embodiment of the present disclosure provides a computer-readable storage medium, where a computer program is stored in the storage medium, and the computer program is executed by a processor to implement the data transmission method described above.

In another aspect, an embodiment of the present disclosure provides a chip, where the chip includes a programmable logic circuit and/or program instructions, and when the chip runs on a terminal or a network device, the chip is configured to implement the data transmission method described above.

In another aspect, an embodiment of the present disclosure provides a computer program product, including computer instructions, where the computer instructions are stored in a computer-readable storage medium; a processor of a communications device reads the computer instructions from the computer-readable storage medium and executes the computer instructions, so that the communications device implements the data transmission method described above.

In another aspect, an embodiment of the present disclosure provides a computer program, where the computer program is executed by a processor of a communications device to implement the data transmission method described above.

The technical solutions provided in the embodiments of the present disclosure may include the following beneficial effects:
The terminal device is enabled to perform, within a first time period, at least one of: receiving downlink data, transmitting uplink data, or monitoring a downlink control channel, in a case where a first constraint condition is satisfied, so that the terminal device can perform data transmission without interruption within the first time period based on the first constraint condition, thereby ensuring continuity of data transmission.

### BRIEF DESCRIPTION OF THE DRAWINGS

FIG. 1 is a schematic diagram of a network-controlled small gap provided by related technologies;
FIG. 2 is a schematic diagram of a communications system according to an exemplary embodiment of the present disclosure;
FIG. 3 is a flowchart of a data transmission method according to an embodiment of the present disclosure;
FIG. 4 is a schematic diagram of a data transmission method according to an embodiment of the present disclosure;
FIG. 5 is a schematic diagram of a data transmission method according to an embodiment of the present disclosure;
FIG. 6 is a schematic diagram of a data transmission method according to an embodiment of the present disclosure;
FIG. 7 is a schematic diagram of a data transmission method according to an embodiment of the present disclosure;
FIG. 8 is a schematic diagram of a data transmission method according to an embodiment of the present disclosure;
FIG. 9 is a schematic diagram of a data transmission method according to an embodiment of the present disclosure;
FIG. 10 is a schematic diagram of a data transmission method according to an embodiment of the present disclosure;
FIG. 11 is a schematic diagram of a data transmission method according to an embodiment of the present disclosure;
FIG. 12 is a schematic diagram of a data transmission method according to an embodiment of the present disclosure;
FIG. 13 is a flowchart of a data transmission method according to an embodiment of the present disclosure;
FIG. 14 is a structural block diagram of a data transmission apparatus according to an embodiment of the present disclosure;
FIG. 15 is a structural block diagram of a data transmission apparatus according to an embodiment of the present disclosure;
FIG. 16 is a schematic structural diagram of a communications device according to an embodiment of the present disclosure.

### DETAILED DESCRIPTION

To make the objectives, technical solutions, and advantages of the present disclosure clearer, the embodiments of the present disclosure are further described in detail below with reference to the accompanying drawings. Exemplary embodiments are described in detail herein, and examples thereof are shown in the accompanying drawings. When the following description refers to the accompanying drawings, unless otherwise indicated, the same numbers in different drawings represent the same or similar elements. The implementations described in the following exemplary embodiments do not represent all implementations consistent with the present disclosure. Instead, they are merely examples of apparatuses and methods consistent with some aspects of the present disclosure as detailed in the appended claims. All other embodiments obtained by a person of ordinary skill in the art based on the embodiments of the present disclosure without creative efforts shall fall within the protection scope of the present disclosure. The terms used in the present disclosure are for the purpose of describing particular embodiments only and are not intended to limit the present disclosure. The singular forms "a", "an", and "the" used in the present disclosure and the appended claims are also intended to include the plural forms unless the context clearly dictates otherwise. It should be further understood that the term "and/or" used herein refers to and includes any or all possible combinations of one or more of the associated listed items. It should be understood that although the terms "first", "second", "third", etc. may be used in the present disclosure to describe various information, the information should not be limited to these terms. These terms are only used to distinguish information of the same type from each other. For example, without departing from the scope of the present disclosure, first information may also be referred to as second information, and similarly, second information may also be referred to as first information. Depending on the context, the word "if" as used herein may be interpreted as "when" or "upon" or "in response to a determination".

First, related technologies involved in the embodiments of the present disclosure are introduced:

### Semi-static transmission

A downlink semi-static periodic transmission manner of New Radio (NR) is Semi-Persistent Scheduling (SPS) Physical Downlink Shared Channel (PDSCH). After some parameters are preconfigured by Radio Resource Control (RRC) signaling and activated by Downlink Control Information (DCI) signaling, a terminal device may periodically transmit PDSCH on preconfigured resources, and each PDSCH occupies the same number of resources. RRC configuration parameters include but are not limited to: cs-RNTI, periodicity, number of Hybrid Automatic Repeat Request (HARQ) processes (nrof HARQ-Processes), HARQ process offset (HARQ-Proc ID-Offset), etc.

An uplink semi-static periodic transmission manner supported by NR is Configured Grant (CG) Physical Uplink Shared Channel (PUSCH) transmission, which specifically includes two types:
Type 1: type-1 CG: takes effect without DCI activation after transmission parameters are configured by RRC;
Type 2: type-2 CG: takes effect after DCI activation after transmission parameters are configured by RRC.

In some related technologies, PUSCH is transmitted once in one CG period, that is, there is only one PUSCH occasion. In other related technologies, one terminal device may be configured with multiple CG configurations at the same time. Parameters of different CG configurations are independently configured. The terminal device determines a corresponding CG PUSCH transmission resource for each CG configuration. In an XR design provided in other related technologies, multiple PUSCH occasions may be configured in one period of one CG configuration for transmitting large data packets.

### Measurement Gap (MG)

A terminal device measures a neighboring cell in an MG configured by a base station for handover or redirection. MG configurations currently supported in an NR system are shown in Table 1 below. Measurement Gap Repetition Period represents an occurrence period of an MG, and Measurement Gap Length is an MG length during which the terminal device performs measurement in each period. Within an MG, the terminal device needs to switch to a frequency of a neighboring cell to receive a measurement signal, and cannot perform data transmission or reception in a current serving cell.

**Table 1**

| **Gap Pattern Id** | **Measurement Gap Length (MGL, ms)** | **Measurement Gap Repetition Period (MGRP, ms)** |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |
| 24 | 10 | 80 |
| 25 | 20 | 160 |

### Network Controlled Small Gap (NCSG)

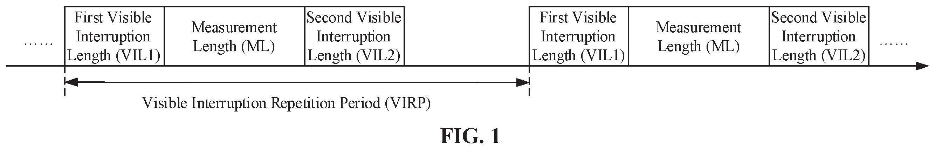

For a terminal device configured with an NCSG, as shown in FIG. 1, a Visible Interruption Repetition Period (VIRP) is used as a period. The terminal device performs measurement during a Measurement Length (ML), and whether data transmission or reception is supported during the ML depends on specific configuration of a serving cell. During a first Visible Interruption Length (VIL) (also referred to as VIL1) and a second VIL (also referred to as VIL2), the terminal device does not perform data transmission or reception. VIL1 is before the ML, and VIL2 is after the ML. NCSG configurations supported by the terminal device are shown in Table 2 below.

**Table 2**

| **NCSG Pattern Id** | **Measurement Length during which there is no gap (ML, ms)** | **Visible interruption Repetition Period (VIRP, ms)** |
|---|---|---|
| 0 | 5 | 40 |
| 1 | 5 | 80 |
| 2 | 2 | 40 |
| 3 | 2 | 80 |
| 4 | 5 | 20 |
| 5 | 5 | 160 |
| 6 | 3 | 20 |
| 7 | 3 | 40 |
| 8 | 3 | 80 |
| 9 | 3 | 160 |
| 10 | 2 | 20 |
| 11 | 2 | 160 |
| 12 | 5 | 20 |
| 13 | 5 | 40 |
| 14 | 5 | 80 |
| 15 | 5 | 160 |
| 16 | 3 | 20 |
| 17 | 3 | 40 |
| 18 | 3 | 80 |
| 19 | 3 | 160 |
| 20 | 1 | 20 |
| 21 | 1 | 40 |
| 22 | 1 | 80 |
| 23 | 1 | 160 |

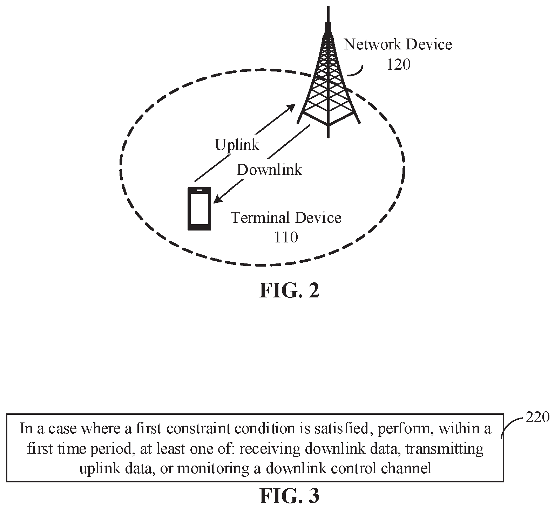

FIG. 2 is a schematic diagram of a communications system according to an exemplary embodiment of the present disclosure. The communications system includes a terminal device 110 and a network device 120.

The terminal device 110 in the present disclosure may also be referred to as User Equipment (UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal includes but is not limited to: a handheld device, a wearable device, a vehicle-mounted device, an Internet of Things device, etc., for example, a mobile phone, a tablet computer, an e-book reader, a laptop computer, a desktop computer, a television, a game console, a Mobile Internet Device (MID), an Augmented Reality (AR) terminal, a Virtual Reality (VR) terminal, a Mixed Reality (MR) terminal, a wearable device, a handle, an electronic tag, a controller, a wireless terminal in Industrial Control, a wireless terminal in Self Driving, a wireless terminal in Remote Medical, a wireless terminal in Smart Grid, a wireless terminal in Transportation Safety, a wireless terminal in Smart City, a wireless terminal in Smart Home, a wireless terminal in Remote Medical Surgery, a cellular phone, a cordless phone, a Session Initiation Protocol (SIP) phone, a Wireless Local Loop (WLL) station, a Personal Digital Assistant (PDA), a Set Top Box (STB), a Customer Premise Equipment (CPE), etc.

The network device 120 in the present disclosure provides a wireless communications function. The network device 120 includes but is not limited to: an Evolved Node B (eNB), a Radio Network Controller (RNC), a Node B (NB), a Base Station Controller (BSC), a Base Transceiver Station (BTS), a Home base station (for example, a Home Evolved Node B or a Home Node B (HNB)), a Baseband Unit (BBU), an Access Point (AP) in a Wireless Fidelity (Wi-Fi) system, a wireless relay node, a wireless backhaul node, a Transmission Point (TP), a Transmission and Reception Point (TRP), etc., and may also be a Next Generation Node B (gNB) or a transmission point (TRP or TP) in a fifth-generation (5G) mobile communications system, or one or a group of (including multiple antenna panels) antenna panels of a base station in a 5G system, or a network node constituting a gNB or a transmission point, such as a BBU or a Distributed Unit (DU), etc., or a base station in a Beyond fifth-generation (B5G) mobile communications system, a sixth-generation (6G) mobile communications system, etc., or a Core Network (CN), a Fronthaul, a Backhaul, a Radio Access Network (RAN), network slicing, etc., or a serving cell, a Primary Cell (PCell), a Primary Secondary Cell (PSCell), a Special Cell (SpCell), a Secondary Cell (SCell), a neighboring cell, etc. of the terminal device.

The terminal device 110 and the network device 120 communicate with each other through an air interface technology, for example, a Uu interface. Exemplarily, there are two communications scenarios between the terminal device 110 and the network device 120: an uplink communications scenario and a downlink communications scenario. Uplink communication means that the terminal device 110 transmits a signal to the network device 120; downlink communication means that the network device 120 transmits a signal to the terminal device 110.

The technical solutions provided in the embodiments of the present disclosure may be applied to various communications systems, for example: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) communications system, a 5G mobile communications system, an NR system, an evolved system of the NR system, an LTE-based access to unlicensed spectrum (LTE-U) system, an NR-based access to unlicensed spectrum (NR-U) system, a Terrestrial Networks (TN) system, a Non-Terrestrial Networks (NTN) system, a Wireless Local Area Networks (WLAN), Wi-Fi, a cellular Internet of Things system, a cellular passive Internet of Things system, and may also be applied to an evolved system subsequent to the 5G NR system, and further applied to B5G, 6G and subsequent evolved systems.

In some embodiments of the present disclosure, "NR" may also be referred to as a 5G NR system or a 5G system. The 5G mobile communications system may include Non-Standalone (NSA) and/or Standalone (SA). The technical solutions provided in the embodiments of the present disclosure may also be applied to Machine Type Communication (MTC), Long Term Evolution-Machine (LTE-M), a Device to Device (D2D) network, a Machine to Machine (M2M) network, an Internet of Things (IoT) network, or other networks. The IoT network may include, for example, an Internet of Vehicles. Communication manners in the Internet of Vehicles system are collectively referred to as Vehicle to X (V2X, where X may represent anything). For example, the V2X may include: Vehicle to Vehicle (V2V) communication, Vehicle to Infrastructure (V2I) communication, Vehicle to Pedestrian (V2P) communication, or Vehicle to Network (V2N) communication, etc.

In related technologies, due to high requirements for delay and reliability of an XR service. According to a current working mechanism, a terminal device transmitting an XR service interrupts data transmission within a cell during an MG or VIL1/ML/VIL2 of an NCSG, that is, low-delay and high-reliability transmission requirements cannot be met. In view of the foregoing problem, the embodiments of the present disclosure provide a data transmission method, configured to preferentially ensure service transmission and abandon measurement when a time period corresponding to transmission of a specific service (for example, an XR service) conflicts with a time period corresponding to an MG or VIL1/ML/VIL2 of an NCSG. FIG. 3 is a flowchart of a data transmission method according to an exemplary embodiment of the present disclosure. The method is performed by a terminal device, and includes the following operations.

At operation 220, at least one of receiving downlink data, transmitting uplink data, or monitoring a downlink control channel is performed within a first time period in a case where a first constraint condition is satisfied.

In some embodiments, the first time period is a time period related to measurement.

In some embodiments, the first time period is a time period related to Radio Resource Management (RRM) measurement; or the first time period is a time period related to NCSG; or the first time period is an MG; or the first time period is a VIL; or the first time period is an ML.

In some embodiments, the first time period is a time period related to RRM measurement.

In some embodiments, the first time period includes at least one of the following: a measurement time period; or a processing time period associated with measurement.

Optionally, the first time period includes a measurement time period. In a case where the first constraint condition is satisfied, at least one of receiving downlink data, transmitting uplink data, or monitoring a downlink control channel is performed within the measurement time period.

In some embodiments, the measurement time period includes at least one of the following: an MG; or an ML.

In some embodiments, the processing time period related to measurement includes at least one of the following: a first VIL; or a second VIL.

In some embodiments, the first time period is a time period related to NCSG. Optionally, the time period related to NCSG includes at least one of ML, first VIL, or second VIL.

In some embodiments, the first time period further includes at least one of the following time periods pre-agreed, preconfigured, or predetermined: a time period during which uplink control information is not transmitted; a time period during which a Sounding Reference Signal (SRS) is not transmitted; a time period during which downlink data is not received; a time period during which uplink data is not transmitted; or a time period during which a downlink control channel is not monitored.

In some embodiments, in a case where the first constraint condition is satisfied, measurement within the first time period is abandoned or canceled. Optionally, in a case where the first constraint condition is satisfied, measurement within an MG is abandoned or canceled, which may be described as cancel measurement gap, for example. Optionally, in a case where the first constraint condition is satisfied, measurement within an ML is abandoned or canceled.

In some embodiments, in a case where the first constraint condition is satisfied, measurement associated with the first time period is abandoned or canceled. Optionally, in a case where the first constraint condition is satisfied, measurement associated with the first VIL is abandoned or canceled. Optionally, in a case where the first constraint condition is satisfied, measurement associated with the second VIL is abandoned or canceled.

In some embodiments, in a case where the first constraint condition is satisfied, measurement within a second time period associated with the first time period is abandoned or canceled. Optionally, in a case where the first constraint condition is satisfied, measurement within an ML is abandoned or canceled. Optionally, in a case where the first constraint condition is satisfied, measurement within an ML is abandoned or canceled.

In some embodiments, in a case where the first constraint condition is satisfied, uplink control information and/or an SRS is transmitted within the first time period.

In some embodiments, the at least one of receiving downlink data, transmitting uplink data, or monitoring a downlink control channel is performed in a first cell, the measurement is for a second cell, and the first cell is different from the second cell. For example, the first cell is a serving cell, and the second cell is a neighboring cell. In some embodiments, the "uplink data and/or downlink data" is data of a specified service type. The data of the specified service type has a requirement for transmission continuity. For example, the specified service type is an XR service.

In some embodiments, the first constraint condition includes at least one of the following:
Condition 1: time-domain resources occupied by a first preconfigured transmission overlap or conflict with the first time period;
Condition 2: time-domain resources occupied by a first channel overlap or conflict with the first time period; or
Condition 3: an interval between a time-domain position of a second channel carrying first information and a time-domain position of the first time period is greater than or equal to a predetermined value.

In summary, according to the method provided in this embodiment, the terminal device is enabled to perform, within a first time period, at least one of: receiving downlink data, transmitting uplink data, or monitoring a downlink control channel in a case where a first constraint condition is satisfied, so that the terminal device can perform data transmission without interruption within the first time period based on the first constraint condition, thereby ensuring continuity of data transmission.

### For Condition 1:

In some embodiments, a type of data transmission to which Condition 1 is applicable is semi-static transmission. Whether to start data transmission within the first time period may be determined without introducing an additional signaling indication.

In some embodiments, in a case where time-domain resources occupied by a first preconfigured transmission overlap or conflict with the first time period, at least one of receiving downlink data, transmitting uplink data, or monitoring a downlink control channel is performed within the first time period. Optionally, the time-domain resources occupied by the first preconfigured transmission completely overlap or conflict with the first time period. Optionally, the time-domain resources occupied by the first preconfigured transmission partially overlap or conflict with the first time period.

In some embodiments, in a case where the time-domain resources occupied by the first preconfigured transmission include time-domain resources in the first time period, at least one of receiving downlink data, transmitting uplink data, or monitoring a downlink control channel is performed within the first time period.

In some embodiments, in a case where at least one time-domain resource in the first time period is configured for transmitting the first preconfigured transmission, at least one of receiving downlink data, transmitting uplink data, or monitoring a downlink control channel is performed within the first time period.

In some embodiments, the first preconfigured transmission includes at least one of the following: a periodic transmission channel; a periodic transmission signal; an available channel in periodic transmission channels; or an available signal in periodic transmission signals.

In some embodiments, the periodic transmission channel and/or the periodic transmission signal is determined according to high-layer signaling.

In some embodiments, the periodic transmission channel includes at least one of the following: SPS PDSCH; CG PUSCH; or a Physical Uplink Control Channel (PUCCH) carrying feedback acknowledgement information corresponding to the SPS PDSCH.

In some embodiments, the periodic transmission signal is a signal carried on a periodic transmission channel, and includes at least one of the following: a signal carried on an SPS PDSCH, a signal carried on a CG PUSCH, and a signal carried on a PUCCH carrying feedback acknowledgement information corresponding to the SPS PDSCH.

In some embodiments, the available channel in periodic transmission channels includes at least one of the following: an SPS PDSCH corresponding to a first SPS configuration; a CG PUSCH corresponding to a first CG configuration; a first SPS PDSCH; a first CG PUSCH; a second SPS PDSCH in a plurality of overlapping SPS PDSCHs; or a second CG PUSCH in a plurality of overlapping CG PUSCHs.

In some embodiments, the available signal in periodic transmission signals is a signal carried on an available channel in periodic transmission channels.

In some embodiments, the available channel in periodic transmission channels is a channel that satisfies a second constraint condition in periodic transmission channels.

In some embodiments, the channel satisfying the second constraint condition includes at least one of the following: a channel indicated by configuration information as allowed, permitted, authorized, or enabled for transmission within the first time period; a channel whose occupied symbols do not include an unavailable symbol; a channel satisfying an available condition in a plurality of overlapping channels.

In some embodiments, the available channel in periodic transmission channels is a channel indicated by configuration information as allowed, permitted, authorized, or enabled for transmission within the first time period, and includes an SPS PDSCH corresponding to a first SPS configuration and/or a CG PUSCH corresponding to a first CG configuration.

In some embodiments, the method further includes: receiving configuration information. In some embodiments, the configuration information is transmitted by a network device for each CG configuration separately. That is, for each CG configuration, whether a CG PUSCH corresponding to the CG configuration is allowed, permitted, authorized, or enabled for transmission within the first time period is configured. In some embodiments, the configuration information is transmitted by a network device for each SPS configuration separately. That is, for each SPS configuration, whether an SPS PDSCH corresponding to the SPS configuration is allowed, permitted, authorized, or enabled for transmission within the first time period is configured.

In some embodiments, the configuration information is used to indicate at least one of the following information: the first preconfigured transmission is allowed, permitted, authorized, or enabled for transmission within the first time period; or the first preconfigured transmission corresponds to a first priority.

In some embodiments, the configuration information is used to indicate that the first preconfigured transmission is allowed, permitted, authorized, or enabled for transmission within the first time period.

In some embodiments, first configuration information is received. The first configuration information is used to indicate that an SPS PDSCH corresponding to a first SPS configuration is allowed, permitted, authorized, or enabled for transmission within the first time period.

Optionally, the first configuration information is used to indicate that an SPS PDSCH corresponding to a first SPS configuration can be transmitted in an MG. That is, the first configuration information may be understood as a switch corresponding to a transmission function or a switch corresponding to transmission within a measurement time period. For example, in a case where the first configuration information is received, an SPS PDSCH corresponding to the first SPS configuration can be transmitted in an MG; in a case where the first configuration information is not received, an SPS PDSCH corresponding to the first SPS configuration cannot be transmitted in an MG. For another example, in a case where the first configuration information is received and indicates "allowed, permitted, authorized, or enabled", an SPS PDSCH corresponding to the first SPS configuration can be transmitted in an MG; in a case where the first configuration information is received and indicates "not allowed, not permitted, unauthorized, or disabled", an SPS PDSCH corresponding to the first SPS configuration cannot be transmitted in an MG.

Optionally, the first configuration information corresponds to a target MG, and the first configuration information is used to indicate that an SPS PDSCH corresponding to a first SPS configuration can be transmitted in the target MG.

Optionally, the first configuration information is used to indicate in which MG or MGs an SPS PDSCH corresponding to a first SPS configuration can be transmitted. That is, there are multiple types of MGs, for example, multiple MG opportunities at different times corresponding to one set of MG configurations, or multiple MG opportunities corresponding to multiple sets of MG configurations. A specific MG opportunity identifier or MG configuration identifier may be indicated in the first SPS configuration information.

In some embodiments, second configuration information is received. The second configuration information is used to indicate that a CG PUSCH corresponding to a first CG configuration is allowed, permitted, authorized, or enabled for transmission within the first time period.

Optionally, the second configuration information is used to indicate that a CG PUSCH corresponding to a first CG configuration can be transmitted in an MG. That is, the second configuration information may be understood as a switch corresponding to a transmission function or a switch corresponding to transmission within a measurement time period. For example, in a case where the first configuration information is received, a CG PUSCH corresponding to the first CG configuration can be transmitted in an MG; in a case where the first configuration information is not received, a CG PUSCH corresponding to the first CG configuration cannot be transmitted in an MG. For another example, in a case where the first configuration information is received and indicates "allowed, permitted, authorized, or enabled", a CG PUSCH corresponding to the first CG configuration can be transmitted in an MG; in a case where the first configuration information is received and indicates " not allowed, not permitted, unauthorized, or disabled", a CG PUSCH corresponding to the first CG configuration cannot be transmitted in an MG.

Optionally, the second configuration information corresponds to a target MG, and the second configuration information is used to indicate that a CG PUSCH corresponding to a first CG configuration is allowed, permitted, authorized, or enabled for transmission within the target MG.

Optionally, the second configuration information is used to indicate in which MG or MGs a CG PUSCH corresponding to a first CG configuration can be transmitted. That is, there are multiple types of MGs, for example, multiple MG opportunities at different times corresponding to one set of MG configurations, or multiple MG opportunities corresponding to multiple sets of MG configurations. A specific MG opportunity identifier or MG configuration identifier may be indicated in the first CG configuration information.

In some embodiments, the configuration information is used to indicate a first priority corresponding to the first preconfigured transmission. The first priority is higher than a second priority corresponding to the first time period.

In some embodiments, third configuration information is received. The third configuration information is used to indicate a first priority corresponding to one, several, or all first preconfigured transmissions, and when the first priority is higher than a second priority corresponding to the first time period, data transmission or downlink control channel monitoring is performed within the first time period. When the first priority is equal to or lower than the second priority corresponding to the first time period, data transmission or downlink control channel monitoring is not performed within the first time period.

In the embodiments of the present disclosure, how to perform data transmission within the first time period is determined through indication of configuration information, so that high-priority data transmission can be performed within the first time period, thereby ensuring that an impact on measurement is reduced as much as possible.

In some embodiments, the available channel in periodic transmission channels is a channel whose occupied symbols do not include an unavailable symbol, and includes a first SPS PDSCH and/or a first CG PUSCH. The first SPS PDSCH should be understood as one SPS PDSCH in a plurality of SPS PDSCHs. The first CG PUSCH should be understood as one CG PUSCH in a plurality of CG PUSCHs.

In some embodiments, symbols occupied by the first SPS PDSCH do not include at least one of the following: uplink symbol(s); or flexible symbol(s).

The uplink symbol(s) and/or the flexible symbol(s) is/are unavailable symbol(s). The terminal device can perform uplink transmission on the uplink symbol. The terminal device can perform uplink transmission and/or downlink transmission on the flexible symbol(s).

Optionally, in a case where symbols occupied by an SPS PDSCH include uplink symbol(s) and/or flexible symbol(s), the SPS PDSCH is an unavailable SPS PDSCH. Optionally, in a case where symbols occupied by an SPS PDSCH do not include uplink symbol(s) or flexible symbol(s), the SPS PDSCH is an available SPS PDSCH.

Optionally, in a case where symbols occupied by an SPS PDSCH include uplink symbol(s) and/or flexible symbol(s), the SPS PDSCH is an unavailable SPS PDSCH. Optionally, in a case where symbols occupied by an SPS PDSCH only include downlink symbol(s), the SPS PDSCH is an available SPS PDSCH.

Optionally, when symbols occupied by an SPS PDSCH include uplink symbol(s), the SPS PDSCH is an unavailable SPS PDSCH. Optionally, when symbols occupied by an SPS PDSCH include downlink symbol(s) and/or flexible symbol(s), the SPS PDSCH is an available SPS PDSCH.

In some embodiments, symbols occupied by the first CG PUSCH do not include at least one of the following: downlink symbol(s); symbol(s) occupied by a Synchronization Signal Block (SSB); or flexible symbol(s). The downlink symbol(s) and/or the symbol(s) occupied by the SSB and/or the flexible symbol(s) is/are unavailable symbol(s). The terminal device can perform downlink transmission on the downlink symbol(s).

Optionally, in a case where symbols occupied by a CG PUSCH include downlink symbol(s) and/or symbol(s) occupied by an SSB and/or flexible symbol(s), the CG PUSCH is an unavailable CG PUSCH. Optionally, in a case where symbols occupied by a CG PUSCH do not include downlink symbol(s) and/or symbol(s) occupied by an SSB and/or flexible symbol(s), the CG PUSCH is an available CG PUSCH.

Optionally, when symbols occupied by a CG PUSCH include uplink symbol(s) and/or flexible symbol(s), the CG PUSCH is an unavailable CG PUSCH. Optionally, in a case where symbols occupied by a CG PUSCH only include downlink symbol(s), the CG PUSCH is an available CG PUSCH.

Optionally, in a case where symbols occupied by a CG PUSCH include uplink symbol(s), the CG PUSCH is an unavailable CG PUSCH. Optionally, in a case where symbols occupied by a CG PUSCH include downlink symbol(s) and/or flexible symbol(s), the CG PUSCH is an available CG PUSCH.

In some embodiments, the available channel in periodic transmission channels is a channel satisfying an available condition in a plurality of overlapping channels, and includes a second SPS PDSCH in a plurality of overlapping SPS PDSCHs and/or a second CG PUSCH in a plurality of overlapping CG PUSCHs. The second SPS PDSCH should be understood as one SPS PDSCH in a plurality of SPS PDSCHs. The second CG PUSCH should be understood as one CG PUSCH in a plurality of CG PUSCHs.

In some embodiments, the second SPS PDSCH among the plurality of overlapping SPS PDSCHs includes at least one of the following: an SPS PDSCH corresponding to a first priority; an SPS PDSCH corresponding to a first number; an SPS PDSCH whose start symbol satisfies a first condition; an SPS PDSCH whose carried Transport Block Size (TBS) satisfies a second condition; or an SPS PDSCH whose number of occupied symbols is a first value.

Optionally, the SPS PDSCH corresponding to the first priority is an SPS PDSCH with a highest priority among the plurality of overlapping SPS PDSCHs. Or it may be understood that the SPS PDSCH corresponding to the first priority is an SPS PDSCH with a first-ranked priority among the plurality of overlapping SPS PDSCHs. Optionally, the SPS PDSCH corresponding to the first priority is an SPS PDSCH with a smallest priority value among the plurality of overlapping SPS PDSCHs. Optionally, the SPS PDSCH corresponding to the first priority is an SPS PDSCH with a priority at a target position among the plurality of overlapping SPS PDSCHs. For example, the SPS PDSCH corresponding to the first priority is an SPS PDSCH with a second-ranked priority among the plurality of overlapping SPS PDSCHs.

Optionally, the SPS PDSCH corresponding to the first number is an SPS PDSCH with a largest number among the plurality of overlapping SPS PDSCHs. Or it may be understood that the SPS PDSCH corresponding to the first number is an SPS PDSCH with a number at a first position among the plurality of overlapping SPS PDSCHs. Optionally, the SPS PDSCH corresponding to the first number is an SPS PDSCH with a smallest number among the plurality of overlapping SPS PDSCHs. Or it may be understood that the SPS PDSCH corresponding to the first number is an SPS PDSCH with a number at a last position among the plurality of overlapping SPS PDSCHs. Optionally, the SPS PDSCH corresponding to the first number is an SPS PDSCH with a number at a target position among the plurality of overlapping SPS PDSCHs. For example, the SPS PDSCH corresponding to the first number is an SPS PDSCH with a number at a second position among the plurality of overlapping SPS PDSCHs.

Optionally, the SPS PDSCH whose start symbol satisfies the first condition is an SPS PDSCH with an earliest start symbol among the plurality of overlapping SPS PDSCHs. Optionally, the SPS PDSCH whose start symbol satisfies the first condition is an SPS PDSCH with a latest start symbol among the plurality of overlapping SPS PDSCHs.

Optionally, the SPS PDSCH whose carried TBS satisfies the second condition is an SPS PDSCH with a largest carried TBS among the plurality of overlapping SPS PDSCHs. Optionally, the SPS PDSCH whose carried TBS satisfies the second condition is an SPS PDSCH with a smallest carried TBS among the plurality of overlapping SPS PDSCHs.

Optionally, the SPS PDSCH whose number of occupied symbols is the first value is an SPS PDSCH with a largest number of occupied symbols among the plurality of overlapping SPS PDSCHs. Optionally, the SPS PDSCH whose number of occupied symbols is the first value is an SPS PDSCH with a smallest number of occupied symbols among the plurality of overlapping SPS PDSCHs. Optionally, the SPS PDSCH whose number of occupied symbols is the first value is an SPS PDSCH with a smallest number of occupied symbols among the plurality of overlapping SPS PDSCHs.

In some embodiments, the second CG PUSCH among the plurality of overlapping CG PUSCHs includes at least one of the following: a CG PUSCH corresponding to a second priority; a CG PUSCH corresponding to a second number; a CG PUSCH whose start symbol satisfies a third condition; a CG PUSCH whose carried TBS satisfies a fourth condition; or a CG PUSCH whose number of occupied symbols is a second value.

Optionally, the CG PUSCH corresponding to the second priority is a CG PUSCH with a highest priority among the plurality of overlapping CG PUSCHs. Or it may be understood that the CG PUSCH corresponding to the second priority is a CG PUSCH with a first-ranked priority among the plurality of overlapping CG PUSCHs. Optionally, the CG PUSCH corresponding to the second priority is a CG PUSCH with a smallest priority value among the plurality of overlapping CG PUSCHs. Optionally, the CG PUSCH corresponding to the second priority is a CG PUSCH with a priority at a target position among the plurality of overlapping CG PUSCHs. For example, the CG PUSCH corresponding to the second priority is a CG PUSCH with a second-ranked priority among the plurality of overlapping CG PUSCHs.

Optionally, the CG PUSCH corresponding to the second number is a CG PUSCH with a largest number among the plurality of overlapping CG PUSCHs. Or it may be understood that the CG PUSCH corresponding to the second number is a CG PUSCH with a number at a first position among the plurality of overlapping CG PUSCHs. Optionally, the CG PUSCH corresponding to the second number is a CG PUSCH with a smallest number among the plurality of overlapping CG PUSCHs. Or it may be understood that the CG PUSCH corresponding to the second number is a CG PUSCH with a number at a last position among the plurality of overlapping CG PUSCHs. Optionally, the CG PUSCH corresponding to the second number is a CG PUSCH with a number at a target position among the plurality of overlapping CG PUSCHs. For example, the CG PUSCH corresponding to the second number is a CG PUSCH with a number at a second position among the plurality of overlapping CG PUSCHs.

Optionally, the CG PUSCH whose start symbol satisfies the third condition is a CG PUSCH with an earliest start symbol among the plurality of overlapping CG PUSCHs. Optionally, the CG PUSCH whose start symbol satisfies the third condition is a CG PUSCH with a latest start symbol among the plurality of overlapping CG PUSCHs.

Optionally, the CG PUSCH whose carried TBS satisfies the fourth condition is a CG PUSCH with a largest carried TBS among the plurality of overlapping CG PUSCHs. Optionally, the CG PUSCH whose carried TBS satisfies the fourth condition is a CG PUSCH with a smallest carried TBS among the plurality of overlapping CG PUSCHs.

Optionally, the CG PUSCH whose number of occupied symbols is the second value is a CG PUSCH with a largest number of occupied symbols among the plurality of overlapping CG PUSCHs. Optionally, the CG PUSCH whose number of occupied symbols is the second value is a CG PUSCH with a smallest number of occupied symbols among the plurality of overlapping CG PUSCHs. Optionally, the CG PUSCH whose number of occupied symbols is the second value is a CG PUSCH with a smallest number of occupied symbols among the plurality of overlapping CG PUSCHs.

In the embodiments of the present disclosure, by determining an available channel in periodic transmission channels, the first time period can be prevented from being affected by an invalid channel, and at least one of receiving downlink data, transmitting uplink data, or monitoring a downlink control channel is performed within the first time period only in a case where the first preconfigured transmission is an available channel in periodic transmission channels, thereby reducing an impact on measurement as much as possible.

In some embodiments, description is made by using an example in which the first preconfigured transmission is a CG PUSCH. The method is also applicable to an SPS PDSCH.

In some embodiments, in a case where time-domain resources occupied by a CG PUSCH overlap or conflict with the first time period, at least one of receiving downlink data, transmitting uplink data, or monitoring a downlink control channel is performed within the first time period.

In some embodiments, the time-domain resources occupied by the CG PUSCH completely overlap or conflict with the first time period.

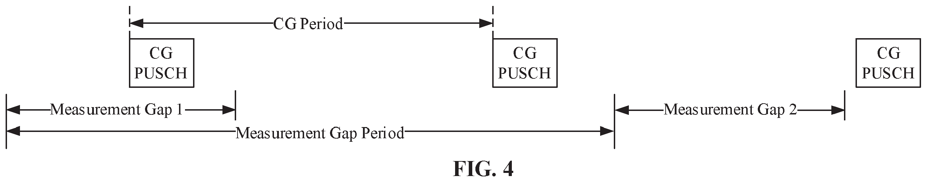

Exemplarily, as shown in FIG. 4, in a case where time-domain resources occupied by a CG PUSCH completely overlap or conflict with MG1, the CG PUSCH is transmitted within MG1. Optionally, no measurement is performed within MG1, that is, measurement is dropped, canceled, or skipped within MG1. Optionally, a Physical Downlink Control Channel (PDCCH) may be further monitored.

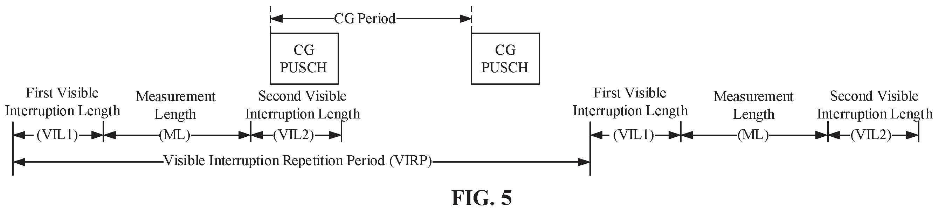

Exemplarily, as shown in FIG. 5, in a case where time-domain resources occupied by a CG PUSCH completely overlap or conflict with VIL2, the CG PUSCH is transmitted within VIL2. Optionally, behaviors within VIL1 and ML are not affected. Optionally, a PDCCH may be further monitored within VIL2. Optionally, no measurement is performed within ML, that is, measurement is dropped, canceled, or skipped within ML. A PDCCH may be further monitored in at least one of VIL1, ML, or VIL2.

In some embodiments, the time-domain resources occupied by the CG PUSCH partially overlap or conflict with the first time period.

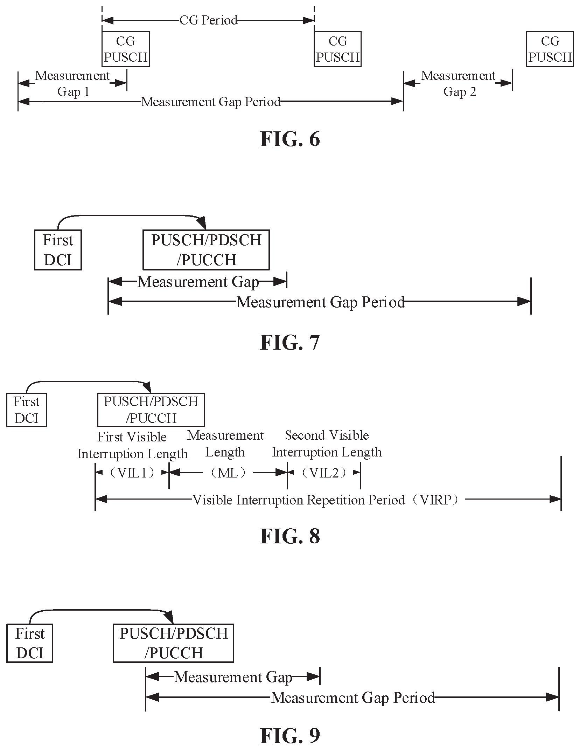

Exemplarily, as shown in FIG. 6, in a case where time-domain resources occupied by a CG PUSCH partially overlap or conflict with MG1, the CG PUSCH is transmitted within MG1. Optionally, a PDCCH may be further monitored. Optionally, no measurement is performed within MG1, that is, measurement is dropped, canceled, or skipped within MG1.

### For Condition 2:

In some embodiments, a type of data transmission to which Condition 2 is applicable is dynamic transmission.

In some embodiments, in a case where time-domain resources occupied by a first channel overlap or conflict with the first time period, at least one of receiving downlink data, transmitting uplink data, or monitoring a downlink control channel is performed within the first time period.

In some embodiments, in a case where the time-domain resources occupied by the first channel include time-domain resources in the first time period, at least one of receiving downlink data, transmitting uplink data, or monitoring a downlink control channel is performed within the first time period.

In some embodiments, in a case where the time-domain resources in the first time period include time-domain resources occupied by the first channel, at least one of receiving downlink data, transmitting uplink data, or monitoring a downlink control channel is performed within the first time period.

In some embodiments, the first channel is indicated by first DCI received before the first time period. In some embodiments, a channel carrying the first DCI includes a PDCCH.

In some embodiments, the method further includes: receiving first DCI. The first DCI is used to indicate transmission of the first channel.

In some embodiments, the first channel includes at least one of a PDSCH, a PUSCH, or a PUCCH.

In the embodiments of the present disclosure, whether to perform data transmission within the first time period is determined by using existing first DCI, and there is no need to design new DCI or introduce a new information field into the DCI, helping reduce waste of signaling resources.

In some embodiments, the time-domain resources occupied by the first channel completely overlap or conflict with the first time period.

Exemplarily, as shown in FIG. 7, the first DCI indicates transmission of a first channel (PDSCH/PUSCH/PUCCH). In a case where time-domain resources occupied by the first channel (PDSCH/PUSCH/PUCCH) completely overlap or conflict with an MG, the first channel (PDSCH/PUSCH/PUCCH) is transmitted within the MG. Optionally, no measurement is performed within the MG, that is, measurement is dropped, canceled, or skipped within the MG.

For example, as shown in FIG. 8, the first DCI indicates transmission of the first channel (PDSCH/PUSCH/PUCCH). In a case where the time-domain resources occupied by the first channel (PDSCH/PUSCH/PUCCH) completely overlap or conflict with VIL1, the first channel (PDSCH/PUSCH/PUCCH) is transmitted within VIL1. Optionally, the behavior in ML and VIL2 is not affected. Optionally, PDCCH may be further monitored within VIL1. Optionally, no measurement is performed within ML, i.e., measurement is dropped, canceled, or skipped within ML. PDCCH may be further monitored within VIL1, ML, and/or VIL2.

In some embodiments, the time-domain resources occupied by the first channel partially overlap or conflict with the first time period.

For example, as shown in Figure 9, the first DCI indicates transmission of the first channel (PDSCH/PUSCH/PUCCH). In a case where the time-domain resources occupied by the first channel (PDSCH/PUSCH/PUCCH) partially overlap or conflict with the MG, the first channel (PDSCH/PUSCH/PUCCH) is transmitted within the MG. Optionally, PDCCH may further be monitored. Optionally, no measurement is performed within the MG, i.e., measurement is dropped, canceled, or skipped within the MG.

### For Condition 3:

In some embodiments, if the interval between the time-domain position of the second channel carrying the first information and the time-domain position of the first time period is greater than or equal to a predetermined value, at least one of receiving downlink data, transmitting uplink data, or monitoring a downlink control channel is performed within the first time period.

In some embodiments, the method further comprises: receiving the first information. The first information is used to indicate that the terminal device to perform at least one of receiving downlink data, transmitting uplink data, or monitoring a downlink control channel within the first time period.

In some embodiments, the first information further includes at least one of the following: identification information corresponding to the first time period; or information related to the time-domain position where the first time period is located.

Optionally, the identification information corresponding to the first time period is used to indicate the terminal device to determine the first time period from a plurality of time periods. Optionally, the identification information corresponding to the first time period is used to indicate the terminal device to determine the first time period corresponding to a target measurement configuration from time periods corresponding to a plurality of measurement configurations. There is a one-to-one correspondence or many-to-one correspondence between the plurality of time periods and the plurality of measurement configurations. For example, in a case where the terminal device has multiple sets of measurement configurations, each corresponding to one MG, the identification information corresponding to the first time period is used to determine the target MG from the plurality of MGs.

In some embodiments, the first information further includes a measurement configuration identifier corresponding to a measurement configuration, where the measurement configuration identifier is used to indicate the terminal device to determine the first time period from time periods corresponding to a plurality of measurement configurations.

For example, the correspondence between measurement identifiers and measurement configurations is shown in Table 3 below:

**Table 3**

| Measurement identifiers | Measurement configurations |
|---|---|
| Identifier 1 | MG configuration 1 |
| Identifier 2 | MG configuration 1, MG configuration 2 |
| | ... |

For example, the correspondence between measurement configuration identifiers and measurement configurations is shown in Table 4 below:

**Table 4**

| Measurement identifiers | Measurement configurations |
|---|---|
| Identifier 1 | MG opportunity 1 |
| Identifier 2 | MG opportunity 1, MG opportunity 2 |
| ... | ... |

Optionally, the information related to the time-domain position where the first time period is located is time window information including at least two of a start time-domain position, an end time-domain position, or a time-domain length of the time window.

In some embodiments, at least one of receiving downlink data, transmitting uplink data, or monitoring a downlink control channel is performed within all or part of the first time period within the time window.

In some embodiments, the first time period is all or part of measurement-related time periods within the time window.

In some embodiments, the first time period is all or part of measurement-related time periods that overlap the time window.

In some embodiments, the first time period is one or more measurement time periods within the time window corresponding to a first measurement configuration, where the first measurement configuration is one or more of all preconfigured or indicated measurement configurations.

In some embodiments, the information related to the time-domain position where the first time period is located is used to indicate the terminal device to determine n time periods within the time window, where the first time period is a set of time periods formed by combining the n time periods, and n is a positive integer. In some embodiments, the n time periods are all measurement-related time periods within the time window. In some embodiments, the n time periods are part of the measurement-related time periods within the time window; optionally, the part of time periods are those indicated by the measurement configuration.

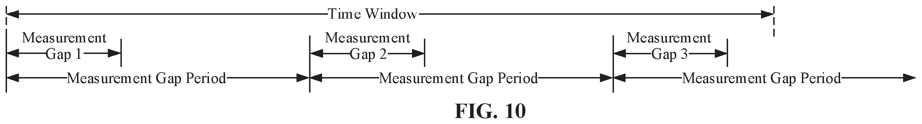

Taking the n time periods being all measurement-related time periods within the time-domain position of the first time period as an example, as shown in FIG. 10, in a case where the first information includes information related to the time-domain position where the first time period is located, the time window is determined based on the information related to the time-domain position where the first time period is located. As shown in FIG. 10, in a case where the time window includes MG1, MG2, and MG3, the first time period is a set of MG1, MG2, and MG3 within the time window.

In some embodiments, that the interval between the time-domain position of the second channel carrying the first information and the time-domain position of the first time period is greater than or equal to a predetermined value includes at least one of the following two cases:
Case 1: the interval between the time-domain end position of the second channel and the time-domain start position of the first time period is greater than or equal to a first predetermined value;
Case 2: the interval between the time unit where the time-domain end position of the second channel is located and the time unit where the time-domain start position of the first time period is located is greater than or equal to a second predetermined value.

In some embodiments, if the interval between the time-domain end position of the second channel and the time-domain start position of the first time period is greater than or equal to the first predetermined value, at least one of receiving downlink data, transmitting uplink data, or monitoring a downlink control channel is performed within the first time period.

In some embodiments, the first predetermined value is N symbols, where N is a positive integer. Optionally, N is 4, 5, 7, 8, or 10. In some embodiments, the first predetermined value is determined according to capabilities of the terminal device.

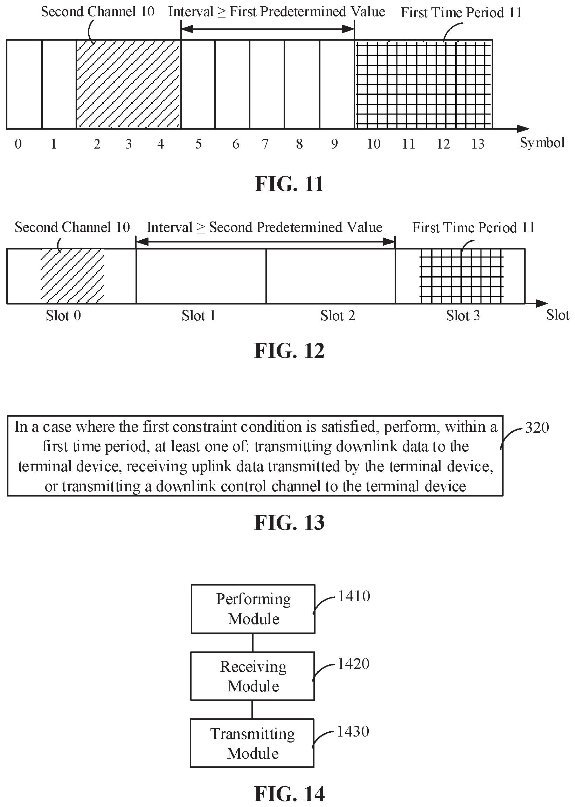

For example, as shown in FIG. 11, the time-domain position where the second channel 10 is located consists of symbol 2, symbol 3, and symbol 4, where the time-domain start position of the second channel 10 is symbol 2 and the time-domain end position is symbol 4. The time-domain position where the first time period 11 is located consists of symbol 10, symbol 11, symbol 12, and symbol 13, where the time-domain start position of the first time period 11 is symbol 10. The interval between the time-domain start position of the first time period 11 and the time-domain end position of the second channel 10 is 5 symbols, i.e., the interval between the time-domain end position of the second channel and the time-domain start position of the first time period is greater than or equal to the first predetermined value.

In some embodiments, if the start symbol of the first time period is no earlier than the N-th symbol after the end symbol of the second channel, at least one of receiving downlink data, transmitting uplink data, or monitoring a downlink control channel is performed within the first time period.

In some embodiments, if the interval between the time unit where the time-domain end position of the second channel is located and the time unit where the time-domain start position of the first time period is located is greater than or equal to the second predetermined value, at least one of receiving downlink data, transmitting uplink data, or monitoring a downlink control channel is performed within the first time period. The time unit includes at least one of a subframe, a slot, or a subslot.

In some embodiments, the second predetermined value is M time units, where M is a positive integer. Optionally, M is 1, 2, 3, or 4. In some embodiments, the second predetermined value is determined according to capabilities of the terminal device.

Taking one time unit as one slot as an example. For example, as shown in FIG. 12, the time unit where the time-domain position of the second channel 10 is located is slot 0, and the time unit where the time-domain position of the first time period 11 is located is slot 4. The interval between the time unit where the time-domain start position of the first time period 11 is located and the time unit where the time-domain end position of the second channel 10 is located is 2 slots (i.e., 2 time-domain units), so the interval between the time unit where the time-domain end position of the second channel is located and the time unit where the time-domain start position of the first time period is located is greater than or equal to the second predetermined value.

It should be understood that the time-domain end position of the second channel is before the time-domain start position of the first time period.

In the embodiments of the present disclosure, whether to perform data transmission within the first time period is determined through dynamic first information, enabling flexible scheduling of data transmission. The terminal device needs to reserve sufficient processing time to cancel the original measurement configuration.

In some embodiments, the first information is a second DCI. The second channel carrying the second DCI is a PDCCH.

In some embodiments, when a value of a first information field in the second DCI is a first value, the second DCI is used to indicate the terminal device to perform, within the first time period, at least one of: receiving downlink data, transmitting uplink data, or monitoring a downlink control channel. For example, the first value is 1 or 0. Optionally, the first information field includes at least one of the following: a measurement gap deactivation information field or a measurement deactivation information field; a Hybrid Automatic Repeat Request HARQ process number information field; or a priority number information field.

In some embodiments, the first information field is a measurement gap deactivation information field or a measurement deactivation information field. The first information field is an independent information field. Using independent information increases overhead but simplifies algorithm implementation. In a case where the value of the measurement gap deactivation information field is the first value, the second DCI indicates to perform, within the first time period, at least one of: receiving downlink data, transmitting uplink data, or monitoring a downlink control channel. In a case where the value of the measurement deactivation information field is the first value, the second DCI indicates to perform, within the first time period, at least one of: receiving downlink data, transmitting uplink data, or monitoring a downlink control channel.

In some embodiments, the first information field is a HARQ process number information field. In a case where the value of the HARQ process number information field is the first value, the second DCI indicates to perform, within the first time period, at least one of: receiving downlink data, transmitting uplink data, or monitoring a downlink control channel. The first value is agreed by a protocol or pre-indicated by a network device via high-layer signaling. Using the HARQ process number information field avoids introducing new overhead but imposes certain scheduling restrictions.

In some embodiments, the first information field is a priority number information field. In a case where the value of the priority number information field is the first value, the second DCI indicates to perform, within the first time period, at least one of: receiving downlink data, transmitting uplink data, or monitoring a downlink control channel. The first value is agreed by a protocol or pre-indicated by a network device via high-layer signaling. Using the priority number information field avoids introducing new overhead but imposes certain scheduling restrictions.

In some embodiments, when the second DCI is scrambled using a first Radio Network Temporary Identifier (RNTI), the second DCI is used to indicate the terminal device to perform, within the first time period, at least one of: receiving downlink data, transmitting uplink data, or monitoring a downlink control channel. In some embodiments, the second DCI includes an RNTI used to scramble the second DCI. When the second DCI is scrambled using the first RNTI, the second DCI is used to indicate to perform, within a first time period, at least one of: receiving downlink data, transmitting uplink data, or monitoring a downlink control channel. Further, the second DCI may also be used to indicate scheduling transmission of other channels. No DCI overhead is needed, scheduling restrictions are small, but additional RNTI consumption is required.

In some embodiments, when the second DCI uses a first DCI format, the second DCI is used to indicate the terminal device to perform, within the first time period, at least one of: receiving downlink data, transmitting uplink data, or monitoring a downlink control channel.

In some embodiments, in a case where the first information is a DCI, the physical layer feeds back, reports, or transfers to the high layer an indication result of receiving downlink data, transmitting uplink data, or monitoring a downlink control channel within the first time period.

In some embodiments, the first information includes a Media Access Control (MAC) Control Element (CE). The second channel carrying the MAC CE is a PDSCH. Using a MAC CE avoids introducing physical-layer overhead but results in slightly higher processing delay.

FIG. 13 illustrates a flowchart of a data transmission method according to an exemplary embodiment of the present disclosure. The method is performed by a network device and includes the following operations.

At operation 320, if a first constraint condition is satisfied, at least one of: transmitting downlink data to a terminal device, receiving uplink data transmitted by the terminal device, or transmitting a downlink control channel to the terminal device is performed within a first time period.

In some embodiments, the first time period is a time period related to measurement of the terminal device.

In some embodiments, the first time period is a time period related to RRM measurement; or the first time period is a time period related to NCSG; or the first time period is an MG; or the first time period is a VIL; or the first time period is an ML.

In some embodiments, the first time period is a time period related to RRM measurement.

In some embodiments, the first time period includes at least one of the following: a measurement time period; or a processing time period associated with measurement.

Optionally, the first time period includes a measurement time period. If the first constraint condition is satisfied, at least one of transmitting downlink data to the terminal device, receiving uplink data transmitted by the terminal device, or transmitting a downlink control channel to the terminal device is performed within the measurement time period.

In some embodiments, the measurement time period includes at least one of the following: MG; or ML.

In some embodiments, the measurement-related processing time period includes at least one of the following: first VIL; or second VIL.

In some embodiments, the first time period is a time period related to NCSG. Optionally, the time period related to NCSG includes at least one of ML, first VIL, or second VIL.

In some embodiments, the first time period further includes at least one of the following pre-agreed, preconfigured, or predetermined time periods: a time period during which uplink control information is not transmitted; a time period during which SRS is not transmitted; a time period during which downlink data is not received; a time period during which uplink data is not transmitted; or a time period during which a downlink control channel is not monitored.

In some embodiments, if the first constraint condition is satisfied, uplink control information transmitted by the terminal device and/or SRS transmitted by the terminal device is received within the first time period.

In some embodiments, the first constraint condition includes at least one of the following:
Condition 1: time-domain resources occupied by a first preconfigured transmission overlap or conflict with the first time period;
Condition 2: time-domain resources occupied by a first channel overlap or conflict with the first time period; or
Condition 3: an interval between a time-domain position of a second channel carrying first information and a time-domain position of the first time period is greater than or equal to a predetermined value.

In summary, the method provided in this embodiment enables the network device to perform, within a first time period, at least one of: transmitting downlink data to the terminal device, receiving uplink data transmitted by the terminal device, or transmitting a downlink control channel to the terminal device, in a case where the first constraint condition is satisfied, so that the network device can perform uninterrupted data transmission within the first time period based on the first constraint condition, thereby ensuring continuity of data transmission.

### For Condition 1:

In some embodiments, the type of data transmission to which Condition 1 applies is semi-persistent transmission. It can be determined whether to enable data transmission within the first time period without introducing additional signaling indication.

In some embodiments, in a case where time-domain resources occupied by the first preconfigured transmission overlap or conflict with the first time period, at least one of transmitting downlink data to the terminal device, receiving uplink data transmitted by the terminal device, or transmitting a downlink control channel to the terminal device is performed within the first time period. Optionally, the time-domain resources occupied by the first preconfigured transmission completely overlap or conflict with the first time period. Optionally, the time-domain resources occupied by the first preconfigured transmission partially overlap or conflict with the first time period.

In some embodiments, in a case where the time-domain resources occupied by the first preconfigured transmission include time-domain resources in the first time period, at least one of transmitting downlink data to the terminal device, receiving uplink data transmitted by the terminal device, or transmitting a downlink control channel to the terminal device is performed within the first time period.

In some embodiments, in a case where at least one time-domain resource in the first time period is configured for transmission of the first preconfigured transmission, at least one of transmitting downlink data to the terminal device, receiving uplink data transmitted by the terminal device, or transmitting a downlink control channel to the terminal device is performed within the first time period.

In some embodiments, the first preconfigured transmission includes at least one of the following: a periodic transmission channel; a periodic transmission signal; an available channel in periodic transmission channels; or an available signal in periodic transmission signals.

In some embodiments, the periodic transmission channel and/or periodic transmission signal are determined according to high-layer signaling.

In some embodiments, the periodic transmission channel includes at least one of the following: SPS PDSCH; CG PUSCH; or PUCCH carrying feedback acknowledgement information corresponding to SPS PDSCH.

In some embodiments, the periodic transmission signal refers to a signal carried on a periodic transmission channel, including at least one of the following: a signal carried on an SPS PDSCH, a signal carried on a CG PUSCH, and a signal carried on a PUCCH carrying feedback acknowledgement information corresponding to an SPS PDSCH.

In some embodiments, the available channel in periodic transmission channels includes at least one of the following: an SPS PDSCH corresponding to a first SPS configuration; a CG PUSCH corresponding to a first CG configuration; a first SPS PDSCH; a first CG PUSCH; a second SPS PDSCH among a plurality of overlapping SPS PDSCHs; or a second CG PUSCH among a plurality of overlapping CG PUSCHs.

In some embodiments, the available signal in periodic transmission signals refers to a signal carried on an available channel in periodic transmission channels.

In some embodiments, the available channel in periodic transmission channels is a channel satisfying a second constraint condition among periodic transmission channels.

In some embodiments, the channel satisfying the second constraint condition includes at least one of the following: a channel indicated by configuration information as allowed, permitted, authorized, or enabled for transmission within the first time period; a channel whose occupied symbols do not include an unavailable symbol; or a channel satisfying available conditions among a plurality of overlapping channels.

In some embodiments, the available channel in periodic transmission channels is a channel indicated by configuration information as allowed, permitted, authorized, or enabled for transmission within the first time period, including an SPS PDSCH corresponding to a first SPS configuration and/or a CG PUSCH corresponding to a first CG configuration.

In some embodiments, the method further comprises: transmitting configuration information. In some embodiments, the configuration information is transmitted by the network device for each CG configuration separately. That is, for each CG configuration, it is configured whether the CG PUSCH corresponding to the CG configuration is allowed, permitted, authorized, or enabled for transmission within the first time period. In some embodiments, the configuration information is transmitted by the network device for each SPS configuration separately. That is, for each SPS configuration, it is configured whether the SPS PDSCH corresponding to the SPS configuration is allowed, permitted, authorized, or enabled for transmission within the first time period.

In some embodiments, the configuration information is used to indicate at least one of the following: the first preconfigured transmission is allowed, permitted, authorized, or enabled for transmission within the first time period; or the first preconfigured transmission corresponds to a first priority.

In some embodiments, the configuration information is used to indicate that the first preconfigured transmission is allowed, permitted, authorized, or enabled for transmission within the first time period.

In some embodiments, first configuration information is transmitted. The first configuration information is used to indicate that the SPS PDSCH corresponding to the first SPS configuration is allowed, permitted, authorized, or enabled for transmission within the first time period.

Optionally, the first configuration information is used to indicate that the SPS PDSCH corresponding to the first SPS configuration can be transmitted in an MG. That is, the first configuration information can be understood as a switch corresponding to a transmission function or a switch corresponding to transmission within a measurement time period. For example, in a case where the first configuration information is received, the SPS PDSCH corresponding to the first SPS configuration can be transmitted in an MG; in a case where the first configuration information is not received, the SPS PDSCH corresponding to the first SPS configuration cannot be transmitted in an MG. For another example, in a case where the first configuration information is received and indicates "allowed, permitted, authorized, or enabled", the SPS PDSCH corresponding to the first SPS configuration can be transmitted in an MG; in a case where the first configuration information is received and indicates "not allowed, not permitted, unauthorized, or disabled", the SPS PDSCH corresponding to the first SPS configuration can be transmitted in an MG.

Optionally, the first configuration information corresponds to a target MG, and is used to indicate that the SPS PDSCH corresponding to the first SPS configuration can be transmitted in the target MG.

Optionally, the first configuration information is used to indicate in which MG or MGs the SPS PDSCH corresponding to the first SPS configuration can be transmitted. That is, there are multiple types of MGs, such as multiple MG opportunities at different times corresponding to one set of MG configurations, or multiple MG opportunities corresponding to multiple sets of MG configurations. A specific MG opportunity identifier or MG configuration identifier may be indicated in the first SPS configuration information.

In some embodiments, second configuration information is transmitted. The second configuration information is used to indicate that the CG PUSCH corresponding to the first CG configuration is allowed, permitted, authorized, or enabled for transmission within the first time period.

Optionally, the second configuration information is used to indicate that the CG PUSCH corresponding to the first CG configuration can be transmitted in an MG. That is, the second configuration information can be understood as a switch corresponding to a transmission function or a switch corresponding to transmission within a measurement time period. For example, in a case where the first configuration information is received, the CG PUSCH corresponding to the first CG configuration can be transmitted in an MG; if the first configuration information is not received, the CG PUSCH corresponding to the first CG configuration cannot be transmitted in an MG. For another example, if the first configuration information is received and indicates "allowed, permitted, authorized, or enabled", the CG PUSCH corresponding to the first CG configuration can be transmitted in an MG; if the first configuration information is received and indicates "not allowed, not permitted, unauthorized, or disabled", the CG PUSCH corresponding to the first CG configuration can be transmitted in an MG.

Optionally, the second configuration information corresponds to a target MG, and is used to indicate that the CG PUSCH corresponding to the first CG configuration is allowed, permitted, authorized, or enabled for transmission in the target MG.

Optionally, the second configuration information is used to indicate in which MG or MGs the CG PUSCH corresponding to the first CG configuration can be transmitted. That is, there are multiple types of MGs, such as multiple MG opportunities at different times corresponding to one set of MG configurations, or multiple MG opportunities corresponding to multiple sets of MG configurations. A specific MG opportunity identifier or MG configuration identifier may be indicated in the first CG configuration information.

In some embodiments, the configuration information is used to indicate a first priority corresponding to the first preconfigured transmission. The first priority is higher than a second priority corresponding to the first time period.

In some embodiments, third configuration information is transmitted. The third configuration information is used to indicate a first priority corresponding to one, several, or all first preconfigured transmissions, and if the first priority is higher than the second priority corresponding to the first time period, data transmission or downlink control channel monitoring is performed within the first time period. If the first priority is equal to or lower than the second priority corresponding to the first time period, data transmission or downlink control channel monitoring is not performed within the first time period.

In the embodiments of the present disclosure, how to perform data transmission within the first time period is determined through indication of configuration information, so that high-priority data transmission can be performed within the first time period, thereby minimizing impact on measurement as much as possible.

In some embodiments, the available channel in periodic transmission channels is a channel whose occupied symbols do not include an unavailable symbol, including a first SPS PDSCH and/or a first CG PUSCH. The first SPS PDSCH should be understood as one SPS PDSCH among a plurality of SPS PDSCHs. The first CG PUSCH should be understood as one CG PUSCH among a plurality of CG PUSCHs.

In some embodiments, symbols occupied by the first SPS PDSCH do not include at least one of the following: uplink symbol(s); or flexible symbol(s).

Uplink symbol(s) and/or flexible symbol(s) is/are unavailable symbol(s). The terminal device can perform uplink transmission on uplink symbol(s). The terminal device can perform uplink transmission and/or downlink transmission on flexible symbol(s).

Optionally, if symbols occupied by an SPS PDSCH include uplink symbol(s) and/or flexible symbol(s), the SPS PDSCH is an unavailable SPS PDSCH. Optionally, if symbols occupied by an SPS PDSCH do not include uplink symbol(s) and flexible symbol(s), the SPS PDSCH is an available SPS PDSCH.

Optionally, if symbols occupied by an SPS PDSCH include uplink symbol(s) and/or flexible symbol(s), the SPS PDSCH is an unavailable SPS PDSCH. Optionally, if symbols occupied by an SPS PDSCH only include downlink symbol(s), the SPS PDSCH is an available SPS PDSCH.

Optionally, if symbols occupied by an SPS PDSCH include uplink symbol(s), the SPS PDSCH is an unavailable SPS PDSCH. Optionally, if symbols occupied by an SPS PDSCH include downlink symbol(s) and/or flexible symbol(s), the SPS PDSCH is an available SPS PDSCH.

In some embodiments, symbols occupied by the first CG PUSCH do not include at least one of the following: downlink symbol(s); symbols occupied by SSB; or flexible symbol(s). Downlink symbol(s) and/or symbol(s) occupied by SSB and/or flexible symbol(s) are unavailable symbols. The terminal device can perform downlink transmission on downlink symbol(s).

Optionally, if symbols occupied by a CG PUSCH include downlink symbol(s) and/or symbols occupied by SSB and/or flexible symbol(s), the CG PUSCH is an unavailable CG PUSCH. Optionally, in a case where symbols occupied by a CG PUSCH do not include downlink symbol(s) and/or symbols occupied by SSB and/or flexible symbol(s), the CG PUSCH is an available CG PUSCH.

Optionally, if symbols occupied by a CG PUSCH include uplink symbol(s) and/or flexible symbol(s), the CG PUSCH is an unavailable CG PUSCH. Optionally, in a case where symbols occupied by a CG PUSCH only include downlink symbol(s), the CG PUSCH is an available CG PUSCH.

Optionally, in a case where symbols occupied by a CG PUSCH include uplink symbol(s), the CG PUSCH is an unavailable CG PUSCH. Optionally, if symbols occupied by a CG PUSCH include downlink symbol(s) and/or flexible symbol(s), the CG PUSCH is an available CG PUSCH.

In some embodiments, the available channel in periodic transmission channels is a channel satisfying available conditions among a plurality of overlapping channels, including a second SPS PDSCH among a plurality of overlapping SPS PDSCHs and/or a second CG PUSCH among a plurality of overlapping CG PUSCHs. The second SPS PDSCH should be understood as one SPS PDSCH among a plurality of SPS PDSCHs. The second CG PUSCH should be understood as one CG PUSCH among a plurality of CG PUSCHs.

In some embodiments, the second SPS PDSCH among the plurality of overlapping SPS PDSCHs includes at least one of the following: an SPS PDSCH corresponding to a first priority; an SPS PDSCH corresponding to a first number; an SPS PDSCH whose start symbol satisfies a first condition; an SPS PDSCH whose carried TBS satisfies a second condition; or an SPS PDSCH whose number of occupied symbols is a first value.

Optionally, the SPS PDSCH corresponding to the first priority is an SPS PDSCH with the highest priority among the plurality of overlapping SPS PDSCHs. Or it can be understood that the SPS PDSCH corresponding to the first priority is an SPS PDSCH with the first-ranked priority among the plurality of overlapping SPS PDSCHs. Optionally, the SPS PDSCH corresponding to the first priority is an SPS PDSCH with the smallest priority value among the plurality of overlapping SPS PDSCHs. Optionally, the SPS PDSCH corresponding to the first priority is an SPS PDSCH with the priority at a target position among the plurality of overlapping SPS PDSCHs. For example, the SPS PDSCH corresponding to the first priority is an SPS PDSCH with the second-ranked priority among the plurality of overlapping SPS PDSCHs.

Optionally, the SPS PDSCH corresponding to the first number is an SPS PDSCH with the largest number among the plurality of overlapping SPS PDSCHs. Or it can be understood that the SPS PDSCH corresponding to the first number is an SPS PDSCH with the first-ranked number among the plurality of overlapping SPS PDSCHs. Optionally, the SPS PDSCH corresponding to the first number is an SPS PDSCH with the smallest number among the plurality of overlapping SPS PDSCHs. Or it can be understood that the SPS PDSCH corresponding to the first number is an SPS PDSCH with the first-ranked number among the plurality of overlapping SPS PDSCHs. Optionally, the SPS PDSCH corresponding to the first number is an SPS PDSCH with the number at a target position among the plurality of overlapping SPS PDSCHs. For example, the SPS PDSCH corresponding to the first number is an SPS PDSCH with the second-ranked number among the plurality of overlapping SPS PDSCHs.

Optionally, the SPS PDSCH whose start symbol satisfies the first condition is an SPS PDSCH with the earliest start symbol among the plurality of overlapping SPS PDSCHs. Optionally, the SPS PDSCH whose start symbol satisfies the first condition is an SPS PDSCH with the latest start symbol among the plurality of overlapping SPS PDSCHs.

Optionally, the SPS PDSCH whose carried TBS satisfies the second condition is an SPS PDSCH with the largest carried TBS among the plurality of overlapping SPS PDSCHs. Optionally, the SPS PDSCH whose carried TBS satisfies the second condition is an SPS PDSCH with the smallest carried TBS among the plurality of overlapping SPS PDSCHs.

Optionally, the SPS PDSCH whose number of occupied symbols is the first value is an SPS PDSCH with the largest number of occupied symbols among the plurality of overlapping SPS PDSCHs. Optionally, the SPS PDSCH whose number of occupied symbols is the first value is an SPS PDSCH with the smallest number of occupied symbols among the plurality of overlapping SPS PDSCHs. Optionally, the SPS PDSCH whose number of occupied symbols is the first value is an SPS PDSCH with the smallest number of occupied symbols among the plurality of overlapping SPS PDSCHs.

In some embodiments, the second CG PUSCH among the plurality of overlapping CG PUSCHs includes at least one of the following: a CG PUSCH corresponding to a second priority; a CG PUSCH corresponding to a second number; a CG PUSCH whose start symbol satisfies a third condition; a CG PUSCH whose carried TBS satisfies a fourth condition; or a CG PUSCH whose number of occupied symbols is a second value.

Optionally, the CG PUSCH corresponding to the second priority is a CG PUSCH with the highest priority among the plurality of overlapping CG PUSCHs. Or it can be understood that the CG PUSCH corresponding to the second priority is a CG PUSCH with the first-ranked priority among the plurality of overlapping CG PUSCHs. Optionally, the CG PUSCH corresponding to the second priority is a CG PUSCH with the smallest priority value among the plurality of overlapping CG PUSCHs. Optionally, the CG PUSCH corresponding to the second priority is a CG PUSCH with the priority at a target position among the plurality of overlapping CG PUSCHs. For example, the CG PUSCH corresponding to the second priority is a CG PUSCH with the second-ranked priority among the plurality of overlapping CG PUSCHs.

Optionally, the CG PUSCH corresponding to the second number is a CG PUSCH with the largest number among the plurality of overlapping CG PUSCHs. Or it can be understood that the CG PUSCH corresponding to the second number is a CG PUSCH with the first-ranked number among the plurality of overlapping CG PUSCHs. Optionally, the CG PUSCH corresponding to the second number is a CG PUSCH with the smallest number among the plurality of overlapping CG PUSCHs. Or it can be understood that the CG PUSCH corresponding to the second number is a CG PUSCH with the last-ranked number among the plurality of overlapping CG PUSCHs. Optionally, the CG PUSCH corresponding to the second number is a CG PUSCH with the number at a target position among the plurality of overlapping CG PUSCHs. For example, the CG PUSCH corresponding to the second number is a CG PUSCH with the second-ranked number among the plurality of overlapping CG PUSCHs.

Optionally, the CG PUSCH whose start symbol satisfies the third condition is a CG PUSCH with the earliest start symbol among the plurality of overlapping CG PUSCHs. Optionally, the CG PUSCH whose start symbol satisfies the third condition is a CG PUSCH with the latest start symbol among the plurality of overlapping CG PUSCHs.

Optionally, the CG PUSCH whose carried TBS satisfies the fourth condition is a CG PUSCH with the largest carried TBS among the plurality of overlapping CG PUSCHs. Optionally, the CG PUSCH whose carried TBS satisfies the fourth condition is a CG PUSCH with the smallest carried TBS among the plurality of overlapping CG PUSCHs.

Optionally, the CG PUSCH whose number of occupied symbols is the second value is a CG PUSCH with the largest number of occupied symbols among the plurality of overlapping CG PUSCHs. Optionally, the CG PUSCH whose number of occupied symbols is the second value is a CG PUSCH with the smallest number of occupied symbols among the plurality of overlapping CG PUSCHs. Optionally, the CG PUSCH whose number of occupied symbols is the second value is a CG PUSCH with the smallest number of occupied symbols among the plurality of overlapping CG PUSCHs.

In the embodiments of the present disclosure, by determining an available channel in periodic transmission channels, the first time period can be prevented from being affected by invalid channels, and at least one of transmitting downlink data to the terminal device, receiving uplink data transmitted by the terminal device, or transmitting a downlink control channel to the terminal device is performed within the first time period only in a case where the first preconfigured transmission is an available channel in periodic transmission channels, thereby minimizing impact on measurement as much as possible.

### For Condition 2:

In some embodiments, the type of data transmission to which Condition 2 applies is dynamic transmission.

In some embodiments, if time-domain resources occupied by the first channel overlap or conflict with the first time period, at least one of transmitting downlink data to the terminal device, receiving uplink data transmitted by the terminal device, or transmitting a downlink control channel to the terminal device is performed within the first time period.

In some embodiments, in a case where the time-domain resources occupied by the first channel include time-domain resources in the first time period, at least one of transmitting downlink data to the terminal device, receiving uplink data transmitted by the terminal device, or transmitting a downlink control channel to the terminal device is performed within the first time period.

In some embodiments, in a case where the time-domain resources in the first time period include time-domain resources occupied by the first channel, at least one of transmitting downlink data to the terminal device, receiving uplink data transmitted by the terminal device, or transmitting a downlink control channel to the terminal device is performed within the first time period.

In some embodiments, the first channel is indicated by a first DCI transmitted before the first time period. In some embodiments, the channel carrying the first DCI includes a PDCCH.

In some embodiments, the method further comprises: transmitting the first DCI. The first DCI is used to indicate transmission of the first channel.

In some embodiments, the first channel includes at least one of PDSCH, PUSCH, or PUCCH.

In the embodiments of the present disclosure, whether to perform data transmission within the first time period is determined using an existing first DCI, which can avoid designing a new DCI or introducing a new information field in the DCI, helping reduce waste of signaling resources.

In some embodiments, the time-domain resources occupied by the first channel completely overlap or conflict with the first time period.

In some embodiments, the time-domain resources occupied by the first channel partially overlap or conflict with the first time period.

### For Condition 3:

In some embodiments, in a case where the interval between the time-domain position of the second channel carrying the first information and the time-domain position of the first time period is greater than or equal to a predetermined value, at least one of transmitting downlink data to the terminal device, receiving uplink data transmitted by the terminal device, or transmitting a downlink control channel to the terminal device is performed within the first time period.

In some embodiments, the method further comprises: transmitting the first information. The first information is used to indicate the network device to perform, within the first time period, at least one of: transmitting downlink data to the terminal device, receiving uplink data transmitted by the terminal device, or transmitting a downlink control channel to the terminal device. In some embodiments, the first information further includes at least one of the following: identification information corresponding to the first time period; or information related to the time-domain position where the first time period is located.

Optionally, the identification information corresponding to the first time period is used to indicate the terminal device to determine the first time period from a plurality of time periods. Optionally, the identification information corresponding to the first time period is used to indicate the terminal device to determine the first time period corresponding to a target measurement configuration from time periods corresponding to a plurality of measurement configurations. There is a one-to-one correspondence or many-to-one correspondence between the plurality of time periods and the plurality of measurement configurations. For example, in a case where the terminal device has multiple sets of measurement configurations, each set corresponding to one MG, the identification information corresponding to the first time period is used to determine the target MG from the plurality of MGs.

In some embodiments, the first information further includes a measurement configuration identifier corresponding to a measurement configuration, where the measurement configuration identifier is used to indicate the terminal device to determine the first time period from time periods corresponding to a plurality of measurement configurations.

Optionally, the information related to the time-domain position where the first time period is located is time window information including at least two of a start time-domain position, an end time-domain position, or a time-domain length of the time window.

In some embodiments, at least one of transmitting downlink data to the terminal device, receiving uplink data transmitted by the terminal device, or transmitting a downlink control channel to the terminal device is performed within all or part of the first time period within the time window.

In some embodiments, the first time period is all or part of measurement-related time periods within the time window.

In some embodiments, the first time period is all or part of measurement-related time periods that overlap the time window.

In some embodiments, the first time period is one or more measurement time periods within the time window corresponding to a first measurement configuration, where the first measurement configuration is one or more of all preconfigured or indicated measurement configurations.

In some embodiments, the information related to the time-domain position where the first time period is located is used to indicate the terminal device to determine n time periods within the time window, where the first time period is a set of time periods formed by combining the n time periods, and n is a positive integer. In some embodiments, the n time periods are all measurement-related time periods within the time window. In some embodiments, the n time periods are part of the measurement-related time periods within the time window; optionally, the part of time periods are those indicated by the measurement configuration.

Taking the n time periods being all measurement-related time periods within the time-domain position of the first time period as an example, as shown in FIG. 10, in a case where the first information includes information related to the time-domain position where the first time period is located, the time window is determined based on the information related to the time-domain position where the first time period is located. As shown in FIG. 10, if the time window includes MG1, MG2, and MG3, the first time period is MG1, MG2, and MG3 within the time window.

In some embodiments, that the interval between the time-domain position of the second channel carrying the first information and the time-domain position of the first time period is greater than or equal to a predetermined value includes at least one of the following two cases:
Case 1: the interval between the time-domain end position of the second channel and the time-domain start position of the first time period is greater than or equal to a first predetermined value;
Case 2: the interval between the time unit where the time-domain end position of the second channel is located and the time unit where the time-domain start position of the first time period is located is greater than or equal to a second predetermined value.

In some embodiments, in a case where the interval between the time-domain end position of the second channel and the time-domain start position of the first time period is greater than or equal to the first predetermined value, at least one of transmitting downlink data to the terminal device, receiving uplink data transmitted by the terminal device, or transmitting a downlink control channel to the terminal device is performed within the first time period.

In some embodiments, the first predetermined value is N symbols, where N is a positive integer. Optionally, N is 4, 5, 7, 8, or 10. In some embodiments, the first predetermined value is determined according to capabilities of the terminal device.

For example, as shown in FIG. 11, the time-domain position where the second channel 10 is located consists of symbol 2, symbol 3, and symbol 4, where the time-domain start position of the second channel 10 is symbol 2 and the time-domain end position of the second channel 10 is symbol 4. The time-domain position where the first time period 11 is located consists of symbol 10, symbol 11, symbol 12, and symbol 13, where the time-domain start position of the first time period 11 is symbol 10. The interval between the time-domain start position of the first time period 11 and the time-domain end position of the second channel 10 is 5 symbols, i.e., the interval between the time-domain end position of the second channel and the time-domain start position of the first time period is greater than or equal to the first predetermined value.

In some embodiments, in a case where the start symbol of the first time period is not earlier than the N-th symbol after the end symbol of the second channel, at least one of transmitting downlink data to the terminal device, receiving uplink data transmitted by the terminal device, or transmitting a downlink control channel to the terminal device is performed within the first time period.

In some embodiments, in a case where the interval between the time unit where the time-domain end position of the second channel is located and the time unit where the time-domain start position of the first time period is located is greater than or equal to a second predetermined value, at least one of transmitting downlink data to the terminal device, receiving uplink data transmitted by the terminal device, or transmitting a downlink control channel to the terminal device is performed within the first time period. The time-domain unit includes at least one of a subframe, a slot, or a subslot.

In some embodiments, the second predetermined value is M time units, where M is a positive integer. Optionally, M is 1, 2, 3, or 4. In some embodiments, the second predetermined value is determined according to the capabilities of the terminal device.

Taking one time-domain unit being one slot as an example. As exemplarily shown in FIG. 12, the time unit where the time-domain position of the second channel 10 is located is slot 0, and the time unit where the time-domain position of the first time period 11 is located is slot 4. The interval between the time unit where the time-domain start position of the first time period 11 is located and the time unit where the time-domain end position of the second channel 10 is located is 2 slots (i.e., 2 time-domain units), so the interval between the time unit where the time-domain end position of the second channel is located and the time unit where the time-domain start position of the first time period is located is greater than or equal to the second predetermined value.

It should be understood that the time-domain end position of the second channel is before the time-domain start position of the first time period.

In the embodiments of the present disclosure, whether to perform data transmission in the first time period is determined through dynamic first information, which enables flexible scheduling of data transmission. The terminal device needs to reserve sufficient processing time to cancel the original measurement configuration.

In some embodiments, the first information is second DCI. The second channel carrying the second DCI is a PDCCH.

In some embodiments, when the value of a first information field in the second DCI is a first value, the second DCI is used to indicate the network device to perform, within the first time period, at least one of: transmitting downlink data to the terminal device, receiving uplink data transmitted by the terminal device, or transmitting a downlink control channel to the terminal device. For example, the first value is 1 or 0. Optionally, the first information field includes at least one of the following: a measurement gap deactivation information field or a measurement deactivation information field; a Hybrid Automatic Repeat Request (HARQ) process number information field; or a priority number information field.

In some embodiments, the first information field is a measurement gap deactivation information field or a measurement deactivation information field. The first information field is an independent information field. Using independent information increases overhead but simplifies algorithm implementation. In a case where the value of the measurement gap deactivation information field is the first value, the second DCI indicates the network device to perform, within the first time period, at least one of: transmitting downlink data to the terminal device, receiving uplink data transmitted by the terminal device, or transmitting a downlink control channel to the terminal device. In a case where the value of the measurement deactivation information field is the first value, the second DCI indicates the network device to perform, within the first time period, at least one of: transmitting downlink data to the terminal device, receiving uplink data transmitted by the terminal device, or transmitting a downlink control channel to the terminal device.

In some embodiments, the first information field is a HARQ process number information field. In a case where the value of the HARQ process number information field is the first value, the second DCI indicates the network device to perform, within the first time period, at least one of: transmitting downlink data to the terminal device, receiving uplink data transmitted by the terminal device, or transmitting a downlink control channel to the terminal device. The first value is agreed by a protocol or pre-indicated by the network device via high-layer signaling. Using the HARQ process number information field avoids adding new overhead but introduces certain scheduling restrictions.

In some embodiments, the first information field is a priority number information field. In a case where the value of the priority number information field is the first value, the second DCI indicates the network device to perform, within the first time period, at least one of: transmitting downlink data to the terminal device, receiving uplink data transmitted by the terminal device, or transmitting a downlink control channel to the terminal device. The first value is agreed by a protocol or pre-indicated by the network device via high-layer signaling. Using the priority number information field avoids adding new overhead but introduces certain scheduling restrictions.

In some embodiments, when the second DCI is scrambled using a first Radio Network Temporary Identifier (RNTI), the second DCI is used to indicate the network device to perform, within the first time period, at least one of: transmitting downlink data to the terminal device, receiving uplink data transmitted by the terminal device, or transmitting a downlink control channel to the terminal device. In some embodiments, the second DCI includes the RNTI used to scramble the second DCI. When the second DCI is scrambled using the first RNTI, the second DCI is used to indicate the network device to perform, within the first time period, at least one of: transmitting downlink data to the terminal device, receiving uplink data transmitted by the terminal device, or transmitting a downlink control channel to the terminal device. Further, the second DCI may also be used to indicate scheduling of transmission on other channels. No additional DCI overhead is needed, scheduling restrictions are small, but extra RNTI consumption is required.

In some embodiments, when the second DCI uses a first DCI format, the second DCI is used to indicate the network device to perform, within the first time period, at least one of: transmitting downlink data to the terminal device, receiving uplink data transmitted by the terminal device, or transmitting a downlink control channel to the terminal device.

In some embodiments, when the first information is a DCI, the physical layer feeds back, reports, or delivers to the high layer the indication result of receiving downlink data, transmitting uplink data, or monitoring the downlink control channel within the first time period.

In some embodiments, the first information includes a MAC CE. The second channel carrying the MAC CE is a PDSCH. Using a MAC CE does not increase physical-layer overhead but results in slightly larger processing delay.

FIG. 14 illustrates a structural block diagram of a data transmission apparatus according to an exemplary embodiment of the present disclosure. The apparatus includes a performing module 1410.

The performing module 1410 is configured to perform, within a first time period, at least one of: receiving downlink data, transmitting uplink data, or monitoring a downlink control channel, in a case where a first constraint condition is satisfied.

In some embodiments, the first time period is a time period related to measurement.

In some embodiments, the first time period is a time period related to RRM measurement; or the first time period is a time period related to NCSG; or the first time period is MG; or the first time period is VIL; or the first time period is ML.

In some embodiments, the first time period is a time period related to RRM measurement.

In some embodiments, the first time period includes at least one of the following: a measurement time period; or a processing time period associated with measurement.

Optionally, the first time period includes a measurement time period. In a case where the first constraint condition is satisfied, at least one of the following is performed within the measurement time period: receiving downlink data, transmitting uplink data, or monitoring a downlink control channel.

In some embodiments, the measurement time period includes at least one of the following: MG; or ML.

In some embodiments, the processing time period related to measurement includes at least one of the following: first VIL; or second VIL.

In some embodiments, the first time period is a time period related to NCSG. Optionally, the time period related to NCSG includes at least one of ML, first VIL, or second VIL.

In some embodiments, the first time period further includes at least one of the following pre-agreed, pre-configured, or pre-determined time periods: a time period during which uplink control information is not transmitted; a time period during which SRS is not transmitted; a time period during which downlink data is not received; a time period during which uplink data is not transmitted; or a time period during which the downlink control channel is not monitored.

In some embodiments, in a case where the first constraint condition is satisfied, the measurement within the first time period is abandoned or canceled. Optionally, in a case where the first constraint condition is satisfied, the measurement within MG is abandoned or canceled, which may be described as cancel measurement gap. Optionally, in a case where the first constraint condition is satisfied, the measurement within ML is abandoned or canceled.

In some embodiments, in a case where the first constraint condition is satisfied, the measurement associated with the first time period is abandoned or canceled. Optionally, in a case where the first constraint condition is satisfied, the measurement associated with the first VIL is abandoned or canceled. Optionally, in a case where the first constraint condition is satisfied, the measurement associated with the second VIL is abandoned or canceled.

In some embodiments, in a case where the first constraint condition is satisfied, the measurement within a second time period associated with the first time period is abandoned or canceled. Optionally, in a case where the first constraint condition is satisfied, the measurement within ML is abandoned or canceled. Optionally, in a case where the first constraint condition is satisfied, the measurement within ML is abandoned or canceled.

In some embodiments, in a case where the first constraint condition is satisfied, uplink control information and/or SRS is transmitted within the first time period.

In some embodiments, the at least one of receiving downlink data, transmitting uplink data, or monitoring a downlink control channel is performed in a first cell, the measurement is for a second cell, and the first cell is different from the second cell. For example, the first cell is a serving cell and the second cell is a neighboring cell.

In some embodiments, the "uplink data and/or downlink data" is data of a specified service type. The data of the specified service type has a requirement for transmission continuity. For example, the specified service type is XR service.

In some embodiments, the first constraint condition includes at least one of the following:
Condition 1: time-domain resources occupied by a first pre-configured transmission overlap or conflict with the first time period;
Condition 2: time-domain resources occupied by a first channel overlap or conflict with the first time period;
Condition 3: an interval between a time-domain position of a second channel carrying first information and a time-domain position of the first time period is greater than or equal to a predetermined value.

### For Condition 1:

In some embodiments, the type of data transmission to which Condition 1 applies is semi-persistent transmission. Whether to enable data transmission within the first time period can be determined without introducing additional signaling indication.

In some embodiments, in a case where the time-domain resources occupied by the first pre-configured transmission overlap or conflict with the first time period, at least one of receiving downlink data, transmitting uplink data, or monitoring a downlink control channel is performed within the first time period. Optionally, the time-domain resources occupied by the first pre-configured transmission completely overlap or conflict with the first time period. Optionally, the time-domain resources occupied by the first pre-configured transmission partially overlap or conflict with the first time period.

In some embodiments, in a case where the time-domain resources occupied by the first pre-configured transmission include time-domain resources in the first time period, at least one of receiving downlink data, transmitting uplink data, or monitoring a downlink control channel is performed within the first time period.

In some embodiments, when at least one time-domain resource in the first time period is configured for transmission of the first pre-configured transmission, at least one of receiving downlink data, transmitting uplink data, or monitoring a downlink control channel is performed within the first time period.

In some embodiments, the first pre-configured transmission includes at least one of the following: a periodic transmission channel; a periodic transmission signal; an available channel among periodic transmission channels; or an available signal among periodic transmission signals.

In some embodiments, the periodic transmission channel and/or the periodic transmission signal is determined according to high-layer signaling.

In some embodiments, the periodic transmission channel includes at least one of the following: SPS PDSCH; CG PUSCH; or PUCCH carrying feedback acknowledgement information corresponding to SPS PDSCH.

In some embodiments, the periodic transmission signal refers to a signal carried on a periodic transmission channel, including at least one of the following: a signal carried on SPS PDSCH, a signal carried on CG PUSCH, or a signal carried on PUCCH carrying feedback acknowledgement information corresponding to SPS PDSCH.

In some embodiments, the available channel among periodic transmission channels includes at least one of the following: SPS PDSCH corresponding to a first SPS configuration; CG PUSCH corresponding to a first CG configuration; first SPS PDSCH; first CG PUSCH; a second SPS PDSCH among multiple overlapping SPS PDSCHs; a second CG PUSCH among multiple overlapping CG PUSCHs.

In some embodiments, the available signal among periodic transmission signals refers to a signal carried on an available channel among periodic transmission channels.

In some embodiments, the available channel among periodic transmission channels is a channel satisfying a second constraint condition among periodic transmission channels.

In some embodiments, the channel satisfying the second constraint condition includes at least one of the following: a channel allowed, permitted, authorized, or enabled to transmit within the first time period as indicated by configuration information; a channel in which occupied symbols do not include an unavailable symbol; or a channel satisfying an available condition among multiple overlapping channels.

In some embodiments, the available channel among periodic transmission channels is a channel allowed, permitted, authorized, or enabled to transmit within the first time period as indicated by configuration information, including SPS PDSCH corresponding to a first SPS configuration and/or CG PUSCH corresponding to a first CG configuration.

The apparatus further includes a receiving module 1420, configured to receive configuration information. In some embodiments, the configuration information is transmitted by the network device for each CG configuration separately. That is, for each CG configuration, it is configured whether the CG PUSCH corresponding to the CG configuration is allowed, permitted, authorized, or enabled to transmit within the first time period. In some embodiments, the configuration information is transmitted by the network device for each SPS configuration separately. That is, for each SPS configuration, it is configured whether the SPS PDSCH corresponding to the SPS configuration is allowed, permitted, authorized, or enabled to transmit within the first time period.

In some embodiments, the configuration information is used to indicate at least one of the following information: the first pre-configured transmission is allowed, permitted, authorized, or enabled to transmit within the first time period; or the first pre-configured transmission corresponds to a first priority.

In some embodiments, the configuration information is used to indicate that the first pre-configured transmission is allowed, permitted, authorized, or enabled to transmit within the first time period.

The receiving module 1420 is configured to receive first configuration information. The first configuration information is used to indicate that the SPS PDSCH corresponding to the first SPS configuration is allowed, permitted, authorized, or enabled to transmit within the first time period.

Optionally, the first configuration information is used to indicate that the SPS PDSCH corresponding to the first SPS configuration can be transmitted in MG. That is, the first configuration information can be understood as a switch corresponding to a transmission function or a switch corresponding to transmission within a measurement time period. For example, in a case where the first configuration information is received, the SPS PDSCH corresponding to the first SPS configuration can be transmitted in MG; in a case where the first configuration information is not received, the SPS PDSCH corresponding to the first SPS configuration cannot be transmitted in MG. For another example, in a case where the first configuration information is received and indicates "allowed, permitted, authorized, or enabled", the SPS PDSCH corresponding to the first SPS configuration can be transmitted in MG; in a case where the first configuration information is received and indicates "not allowed, not permitted, unauthorized, or disabled", the SPS PDSCH corresponding to the first SPS configuration cannot be transmitted in MG.

Optionally, the first configuration information corresponds to a target MG, and the first configuration information is used to indicate that the SPS PDSCH corresponding to the first SPS configuration can be transmitted in the target MG.

Optionally, the first configuration information is used to indicate in which MG or MGs the SPS PDSCH corresponding to the first SPS configuration can be transmitted. That is, there are multiple types of MGs, such as multiple MG opportunities at different times corresponding to one set of MG configurations, or multiple MG opportunities corresponding to multiple sets of MG configurations. The first SPS configuration information may indicate a specific MG opportunity identifier or MG configuration identifier.

The receiving module 1420 is configured to receive second configuration information. The second configuration information is used to indicate that the CG PUSCH corresponding to the first CG configuration is allowed, permitted, authorized, or enabled to transmit within the first time period.

Optionally, the second configuration information is used to indicate that the CG PUSCH corresponding to the first CG configuration can be transmitted in MG. That is, the second configuration information can be understood as a switch corresponding to a transmission function or a switch corresponding to transmission within a measurement time period. For example, in a case where the first configuration information is received, the CG PUSCH corresponding to the first CG configuration can be transmitted in MG; in a case where the first configuration information is not received, the CG PUSCH corresponding to the first CG configuration cannot be transmitted in MG. For another example, in a case where the first configuration information is received and indicates "allowed, permitted, authorized, or enabled", the CG PUSCH corresponding to the first CG configuration can be transmitted in MG; in a case where the first configuration information is received and indicates "not allowed, not permitted, unauthorized, or disabled", the CG PUSCH corresponding to the first CG configuration can be transmitted in MG.

Optionally, the second configuration information corresponds to a target MG, and the second configuration information is used to indicate that the CG PUSCH corresponding to the first CG configuration is allowed, permitted, authorized, or enabled to transmit in the target MG.

Optionally, the second configuration information is used to indicate in which MG or MGs the CG PUSCH corresponding to the first CG configuration can be transmitted. That is, there are multiple types of MGs, such as multiple MG opportunities at different times corresponding to one set of MG configurations, or multiple MG opportunities corresponding to multiple sets of MG configurations. The first CG configuration information may indicate a specific MG opportunity identifier or MG configuration identifier.

In some embodiments, the configuration information is used to indicate a first priority corresponding to the first pre-configured transmission. The first priority is higher than a second priority corresponding to the first time period.

The receiving module 1420 is configured to receive third configuration information. The third configuration information is used to indicate a first priority corresponding to one, several, or all first pre-configured transmissions, and if the first priority is higher than a second priority corresponding to the first time period, data transmission or downlink control channel monitoring is performed within the first time period. If the first priority is equal to or lower than the second priority corresponding to the first time period, data transmission or downlink control channel monitoring is not performed within the first time period.

In the embodiments of the present disclosure, how to perform data transmission within the first time period is determined through indication of configuration information, so that high-priority data transmission can be performed within the first time period, thereby minimizing the impact on measurement as much as possible.

In some embodiments, the available channel among periodic transmission channels is a channel in which occupied symbols do not include an unavailable symbol, including first SPS PDSCH and/or first CG PUSCH. The first SPS PDSCH should be understood as one SPS PDSCH among multiple SPS PDSCHs. The first CG PUSCH should be understood as one CG PUSCH among multiple CG PUSCHs.

In some embodiments, symbols occupied by the first SPS PDSCH do not include at least one of the following: uplink symbol(s); or flexible symbol(s).

Uplink symbol(s) and/or flexible symbol(s) is/are unavailable symbol(s). The apparatus can perform uplink transmission on the uplink symbol(s). The apparatus can perform uplink transmission and/or downlink transmission on the flexible symbol(s).

Optionally, in a case where symbols occupied by an SPS PDSCH include uplink symbol(s) and/or flexible symbol(s), the SPS PDSCH is an unavailable SPS PDSCH. Optionally, in a case where symbols occupied by an SPS PDSCH do not include uplink symbol(s) and flexible symbol(s), the SPS PDSCH is an available SPS PDSCH.

Optionally, in a case where symbols occupied by an SPS PDSCH include uplink symbol(s) and/or flexible symbol(s), the SPS PDSCH is an unavailable SPS PDSCH. Optionally, in a case where symbols occupied by an SPS PDSCH only include downlink symbol(s), the SPS PDSCH is an available SPS PDSCH.

Optionally, in a case where symbols occupied by an SPS PDSCH include uplink symbol(s), the SPS PDSCH is an unavailable SPS PDSCH. Optionally, in a case where symbols occupied by an SPS PDSCH include downlink symbol(s) and/or flexible symbol(s), the SPS PDSCH is an available SPS PDSCH.

In some embodiments, symbols occupied by the first CG PUSCH do not include at least one of the following: downlink symbol(s); symbols occupied by SSB; or flexible symbol(s). The downlink symbol(s), symbols occupied by SSB, and/or flexible symbol(s) are unavailable symbols. The apparatus can perform downlink transmission on the downlink symbol(s).

Optionally, in a case where symbols occupied by a CG PUSCH include downlink symbol(s), symbols occupied by SSB, and/or flexible symbol(s), the CG PUSCH is an unavailable CG PUSCH. Optionally, in a case where symbols occupied by a CG PUSCH do not include downlink symbol(s), symbol(s) occupied by SSB, and/or flexible symbol(s), the CG PUSCH is an available CG PUSCH.

Optionally, in a case where symbols occupied by a CG PUSCH include uplink symbol(s) and/or flexible symbol(s), the CG PUSCH is an unavailable CG PUSCH. Optionally, in a case where symbols occupied by a CG PUSCH only include downlink symbol(s), the CG PUSCH is an available CG PUSCH.

Optionally, in a case where symbols occupied by a CG PUSCH include uplink symbol(s), the CG PUSCH is an unavailable CG PUSCH. Optionally, in a case where symbols occupied by a CG PUSCH include downlink symbol(s) and/or flexible symbol(s), the CG PUSCH is an available CG PUSCH.

In some embodiments, the available channel among periodic transmission channels is a channel satisfying an available condition among multiple overlapping channels, including a second SPS PDSCH among multiple overlapping SPS PDSCHs and/or a second CG PUSCH among multiple overlapping CG PUSCHs. The second SPS PDSCH should be understood as one SPS PDSCH among multiple SPS PDSCHs. The second CG PUSCH should be understood as one CG PUSCH among multiple CG PUSCHs.

In some embodiments, the second SPS PDSCH among multiple overlapping SPS PDSCHs includes at least one of the following: an SPS PDSCH corresponding to a first priority; an SPS PDSCH corresponding to a first number; an SPS PDSCH whose start symbol satisfies a first condition; an SPS PDSCH whose carried TBS satisfies a second condition; an SPS PDSCH whose number of occupied symbols is a first value.

Optionally, the SPS PDSCH corresponding to the first priority is an SPS PDSCH with the highest priority among multiple overlapping SPS PDSCHs. Or it can be understood that the SPS PDSCH corresponding to the first priority is an SPS PDSCH with the first-ranked priority among multiple overlapping SPS PDSCHs. Optionally, the SPS PDSCH corresponding to the first priority is an SPS PDSCH with the smallest priority value among multiple overlapping SPS PDSCHs. Optionally, the SPS PDSCH corresponding to the first priority is an SPS PDSCH whose priority is at a target position among multiple overlapping SPS PDSCHs. For example, the SPS PDSCH corresponding to the first priority is an SPS PDSCH with the second-ranked priority among multiple overlapping SPS PDSCHs.

Optionally, the SPS PDSCH corresponding to the first number is an SPS PDSCH with the largest number among multiple overlapping SPS PDSCHs. Or it can be understood that the SPS PDSCH corresponding to the first number is an SPS PDSCH whose number is at the first position among multiple overlapping SPS PDSCHs. Optionally, the SPS PDSCH corresponding to the first number is an SPS PDSCH with the smallest number among multiple overlapping SPS PDSCHs. Or it can be understood that the SPS PDSCH corresponding to the first number is an SPS PDSCH whose number is at the last position among multiple overlapping SPS PDSCHs. Optionally, the SPS PDSCH corresponding to the first number is an SPS PDSCH whose number is at a target position among multiple overlapping SPS PDSCHs. For example, the SPS PDSCH corresponding to the first number is an SPS PDSCH whose number is at the second position among multiple overlapping SPS PDSCHs.

Optionally, the SPS PDSCH whose start symbol satisfies the first condition is an SPS PDSCH with the earliest start symbol among multiple overlapping SPS PDSCHs. Optionally, the SPS PDSCH whose start symbol satisfies the first condition is an SPS PDSCH with the latest start symbol among multiple overlapping SPS PDSCHs.

Optionally, the SPS PDSCH whose carried TBS satisfies the second condition is an SPS PDSCH with the largest carried TBS among multiple overlapping SPS PDSCHs. Optionally, the SPS PDSCH whose carried TBS satisfies the second condition is an SPS PDSCH with the smallest carried TBS among multiple overlapping SPS PDSCHs.

Optionally, the SPS PDSCH whose number of occupied symbols is the first value is an SPS PDSCH with the largest number of occupied symbols among multiple overlapping SPS PDSCHs. Optionally, the SPS PDSCH whose number of occupied symbols is the first value is an SPS PDSCH with the smallest number of occupied symbols among multiple overlapping SPS PDSCHs. Optionally, the SPS PDSCH whose number of occupied symbols is the first value is an SPS PDSCH with the smallest number of occupied symbols among multiple overlapping SPS PDSCHs.

In some embodiments, the second CG PUSCH among multiple overlapping CG PUSCHs includes at least one of the following: a CG PUSCH corresponding to a second priority; a CG PUSCH corresponding to a second number; a CG PUSCH whose start symbol satisfies a third condition; a CG PUSCH whose carried TBS satisfies a fourth condition; a CG PUSCH whose number of occupied symbols is a second value.

Optionally, the CG PUSCH corresponding to the second priority is a CG PUSCH with the highest priority among multiple overlapping CG PUSCHs. Or it can be understood that the CG PUSCH corresponding to the second priority is a CG PUSCH with the first-ranked priority among multiple overlapping CG PUSCHs. Optionally, the CG PUSCH corresponding to the second priority is a CG PUSCH with the smallest priority value among multiple overlapping CG PUSCHs. Optionally, the CG PUSCH corresponding to the second priority is a CG PUSCH whose priority is at a target position among multiple overlapping CG PUSCHs. For example, the CG PUSCH corresponding to the second priority is a CG PUSCH with the second-ranked priority among multiple overlapping CG PUSCHs.

Optionally, the CG PUSCH corresponding to the second number is a CG PUSCH with the largest number among multiple overlapping CG PUSCHs. Or it can be understood that the CG PUSCH corresponding to the second number is a CG PUSCH whose number is at the first position among multiple overlapping CG PUSCHs. Optionally, the CG PUSCH corresponding to the second number is a CG PUSCH with the smallest number among multiple overlapping CG PUSCHs. Or it can be understood that the CG PUSCH corresponding to the second number is a CG PUSCH whose number is at the last position among multiple overlapping CG PUSCHs. Optionally, the CG PUSCH corresponding to the second number is a CG PUSCH whose number is at a target position among multiple overlapping CG PUSCHs. For example, the CG PUSCH corresponding to the second number is a CG PUSCH whose number is at the second position among multiple overlapping CG PUSCHs.

Optionally, the CG PUSCH whose start symbol satisfies the third condition is a CG PUSCH with the earliest start symbol among multiple overlapping CG PUSCHs. Optionally, the CG PUSCH whose start symbol satisfies the third condition is a CG PUSCH with the latest start symbol among multiple overlapping CG PUSCHs.

Optionally, the CG PUSCH whose carried TBS satisfies the fourth condition is a CG PUSCH with the largest carried TBS among multiple overlapping CG PUSCHs. Optionally, the CG PUSCH whose carried TBS satisfies the fourth condition is a CG PUSCH with the smallest carried TBS among multiple overlapping CG PUSCHs.

Optionally, the CG PUSCH whose number of occupied symbols is the second value is a CG PUSCH with the largest number of occupied symbols among multiple overlapping CG PUSCHs. Optionally, the CG PUSCH whose number of occupied symbols is the second value is a CG PUSCH with the smallest number of occupied symbols among multiple overlapping CG PUSCHs. Optionally, the CG PUSCH whose number of occupied symbols is the second value is a CG PUSCH with the smallest number of occupied symbols among multiple overlapping CG PUSCHs.

In the embodiments of the present disclosure, by determining the available channel among periodic transmission channels, the first time period can be prevented from being affected by invalid channels, and at least one of receiving downlink data, transmitting uplink data, or monitoring a downlink control channel is performed within the first time period only in a case where the first pre-configured transmission is an available channel among periodic transmission channels, thereby minimizing the impact on measurement as much as possible.

In some embodiments, the first pre-configured transmission is CG PUSCH for illustration. The method is also applicable to SPS PDSCH.

In some embodiments, when time-domain resources occupied by the CG PUSCH overlap or conflict with the first time period, at least one of receiving downlink data, transmitting uplink data, or monitoring a downlink control channel is performed within the first time period.

In some embodiments, the time-domain resources occupied by the CG PUSCH completely overlap or conflict with the first time period.

In some embodiments, the time-domain resources occupied by the CG PUSCH partially overlap or conflict with the first time period.

### For Condition 2:

In some embodiments, the type of data transmission to which Condition 2 applies is dynamic transmission.

In some embodiments, when time-domain resources occupied by the first channel overlap or conflict with the first time period, at least one of receiving downlink data, transmitting uplink data, or monitoring a downlink control channel is performed within the first time period.

In some embodiments, when the time-domain resources occupied by the first channel include time-domain resources in the first time period, at least one of receiving downlink data, transmitting uplink data, or monitoring a downlink control channel is performed within the first time period.

In some embodiments, when the time-domain resources in the first time period include time-domain resources occupied by the first channel, at least one of receiving downlink data, transmitting uplink data, or monitoring a downlink control channel is performed within the first time period.

In some embodiments, the first channel is indicated by a first DCI received before the first time period. In some embodiments, the channel carrying the first DCI includes PDCCH.

The receiving module 1420 is configured to receive the first DCI. The first DCI is used to indicate transmission of the first channel.

In some embodiments, the first channel includes at least one of PDSCH, PUSCH, or PUCCH.

In the embodiments of the present disclosure, whether to perform data transmission within the first time period is determined by using the existing first DCI, which eliminates the need to design a new DCI or introduce a new information field in the DCI, helping reduce waste of signaling resources.

In some embodiments, the time-domain resources occupied by the first channel completely overlap or conflict with the first time period.

In some embodiments, the time-domain resources occupied by the first channel partially overlap or conflict with the first time period.

### For Condition 3:

In some embodiments, in a case where an interval between a time-domain position of the second channel carrying the first information and a time-domain position of the first time period is greater than or equal to a predetermined value, at least one of receiving downlink data, transmitting uplink data, or monitoring a downlink control channel is performed within the first time period.

The receiving module 1420 is configured to receive the first information. The first information is used to indicate the apparatus to perform, within a first time period, at least one of: receiving downlink data, transmitting uplink data, or monitoring a downlink control channel.

In some embodiments, the first information further includes at least one of the following information: identification information corresponding to the first time period; or information related to a time-domain position where the first time period is located.

Optionally, the identification information corresponding to the first time period is used to indicate the apparatus to determine the first time period from multiple time periods. Optionally, the identification information corresponding to the first time period is used to indicate the apparatus to determine the first time period corresponding to a target measurement configuration from time periods corresponding to multiple measurement configurations. There is a one-to-one correspondence or many-to-one correspondence between the multiple time periods and the multiple measurement configurations. For example, when the apparatus has multiple sets of measurement configurations, each corresponding to one MG, the identification information corresponding to the first time period is used to determine the target MG from multiple MGs.

In some embodiments, the first information further includes a measurement configuration identifier corresponding to a measurement configuration, and the measurement configuration identifier is used to indicate the apparatus to determine the first time period from time periods corresponding to multiple measurement configurations.

Optionally, the related information of the time-domain position where the first time period is located is time window information including at least two of a start time-domain position, an end time-domain position, and a time-domain length of the time window.

In some embodiments, at least one of receiving downlink data, transmitting uplink data, or monitoring a downlink control channel is performed within all or part of the first time period within the time window.

In some embodiments, the first time period is all or part of a measurement-related time period within the time window.

In some embodiments, the first time period is all or part of a measurement-related time period overlapping with the time window.

In some embodiments, the first time period is one or more measurement time periods corresponding to a first measurement configuration within the time window, where the first measurement configuration is one or more of all pre-configured or indicated measurement configurations.

In some embodiments, the related information of the time-domain position where the first time period is located is used to indicate the terminal device to determine n time periods within the above time window, and the first time period is a time period set obtained by combining the n time periods, where n is a positive integer. In some embodiments, the n time periods are all measurement-related time periods within the time window. In some embodiments, the n time periods are part of the measurement-related time periods within the time window, and optionally, the part of time periods are time periods indicated by the measurement configuration.

Taking the n time periods being all measurement-related time periods within the time-domain position where the first time period is located for example, as exemplarily shown in FIG. 10, in a case where the first information includes information related to the time-domain position where the first time period is located, the time window is determined based on the information related to the time-domain position where the first time period is located. As shown in FIG. 10, in a case where the time window is determined based on the information related to the time-domain position where the first time period is located and includes MG1, MG2, and MG3, the first time period is a set of MG1, MG2, and MG3 within the time window.

In some embodiments, that the interval between the time-domain position of the second channel carrying the first information and the time-domain position of the first time period being greater than or equal to the predetermined value includes at least one of the following two cases:
Case 1: an interval between the time-domain end position of the second channel and the time-domain start position of the first time period is greater than or equal to a first predetermined value;
Case 2: an interval between the time unit where the time-domain end position of the second channel is located and the time unit where the time-domain start position of the first time period is located is greater than or equal to a second predetermined value.

In some embodiments, when the interval between the time-domain end position of the second channel and the time-domain start position of the first time period is greater than or equal to the first predetermined value, at least one of receiving downlink data, transmitting uplink data, or monitoring a downlink control channel is performed within the first time period.

In some embodiments, the first predetermined value is N symbols, where N is a positive integer. Optionally, N is 4, 5, 7, 8, or 10. In some embodiments, the first predetermined value is determined according to the capabilities of the terminal device.

As exemplarily shown in FIG. 11, the time-domain position where the second channel 10 is located is composed of symbol 2, symbol 3, and symbol 4, the time-domain start position of the second channel 10 is symbol 2, and the time-domain end position is symbol 4. The time-domain position where the first time period 11 is located is composed of symbol 10, symbol 11, symbol 12, and symbol 13, where the time-domain start position of the first time period 11 is symbol 10. The interval between the time-domain start position of the first time period 11 and the time-domain end position of the second channel 10 is 5 symbols, that is, the interval between the time-domain end position of the second channel and the time-domain start position of the first time period is greater than or equal to the first predetermined value.

In some embodiments, in a case where the start symbol of the first time period is not earlier than the N-th symbol after the end symbol of the second channel, at least one of receiving downlink data, transmitting uplink data, or monitoring a downlink control channel is performed within the first time period.

In some embodiments, in a case where the interval between the time unit where the time-domain end position of the second channel is located and the time unit where the time-domain start position of the first time period is located is greater than or equal to the second predetermined value, at least one of receiving downlink data, transmitting uplink data, or monitoring a downlink control channel is performed within the first time period. The time-domain unit includes at least one of a subframe, a slot, or a subslot.

In some embodiments, the second predetermined value is M time units, where M is a positive integer. Optionally, M is 1, 2, 3, or 4. In some embodiments, the second predetermined value is determined according to the capabilities of the terminal device.

Taking one time-domain unit being one slot as an example. As exemplarily shown in FIG. 12, the time unit where the time-domain position of the second channel 10 is located is slot 0, and the time unit where the time-domain position of the first time period 11 is located is slot 4. The interval between the time unit where the time-domain start position of the first time period 11 is located and the time unit where the time-domain end position of the second channel 10 is located is 2 slots (i.e., 2 time-domain units), so the interval between the time unit where the time-domain end position of the second channel is located and the time unit where the time-domain start position of the first time period is located is greater than or equal to the second predetermined value.

It should be understood that the time-domain end position of the second channel is before the time-domain start position of the first time period.

In the embodiments of the present disclosure, whether to perform data transmission in the first time period is determined through dynamic first information, which enables flexible scheduling of data transmission. The apparatus needs to reserve sufficient processing time to cancel the original measurement configuration.

In some embodiments, the first information is a second DCI. The second channel carrying the second DCI is a PDCCH.

In some embodiments, when the value of a first information field in the second DCI is a first value, the second DCI is used to indicate the terminal device to perform, within a first time period, at least one of: receiving downlink data, transmitting uplink data, or monitoring a downlink control channel. For example, the first value is 1 or 0. Optionally, the first information field includes at least one of the following: a measurement gap deactivation information field or a measurement deactivation information field; a Hybrid Automatic Repeat Request (HARQ) process number information field; or a priority number information field.

In some embodiments, the first information field is a measurement gap deactivation information field or a measurement deactivation information field. The first information field is an independent information field. Using independent information increases overhead but simplifies algorithm implementation. When the value of the measurement gap deactivation information field is the first value, the second DCI indicates performing, within a first time period, at least one of: receiving downlink data, transmitting uplink data, or monitoring a downlink control channel. In a case where the value of the measurement deactivation information field is the first value, the second DCI indicates performing, within a first time period, at least one of: receiving downlink data, transmitting uplink data, or monitoring a downlink control channel.

In some embodiments, the first information field is a HARQ process number information field. In a case where the value of the HARQ process number information field is the first value, the second DCI indicates performing, within a first time period, at least one of: receiving downlink data, transmitting uplink data, or monitoring a downlink control channel. The first value is agreed by a protocol or pre-indicated by the network device via high-layer signaling. Using the HARQ process number information field avoids adding new overhead but introduces certain scheduling restrictions.

In some embodiments, the first information field is a priority number information field. In a case where the value of the priority number information field is the first value, the second DCI indicates performing, within a first time period, at least one of: receiving downlink data, transmitting uplink data, or monitoring a downlink control channel within the first time period. The first value is agreed by a protocol or pre-indicated by the network device via higher-layer signaling. Using the priority number information field avoids adding new overhead but introduces certain scheduling restrictions.

In some embodiments, when the second DCI is scrambled using a first Radio Network Temporary Identifier (RNTI), the second DCI is used to indicate the terminal device to perform, within a first time period, at least one of: receiving downlink data, transmitting uplink data, or monitoring a downlink control channel. In some embodiments, the second DCI includes the RNTI used to scramble the second DCI. When the second DCI is scrambled using the first RNTI, the second DCI is used to indicate performing, within the first time period, at least one of: receiving downlink data, transmitting uplink data, or monitoring a downlink control channel. Further, the second DCI may also be used to indicate scheduling of transmission on other channels. No additional DCI overhead is needed, scheduling restrictions are small, but extra RNTI consumption is required.

In some embodiments, when the second DCI uses a first DCI format, the second DCI is used to indicate the terminal device to perform, within the first time period, at least one of: receiving downlink data, transmitting uplink data, or monitoring a downlink control channel.

In some embodiments, in a case where the first information is a DCI, the physical layer feeds back, reports, or delivers to the high layer the indication result of receiving downlink data, transmitting uplink data, or monitoring the downlink control channel within the first time period.

In some embodiments, the first information includes a MAC CE. The second channel carrying the MAC CE is a PDSCH. Using the MAC CE does not increase physical-layer overhead but results in slightly larger processing delay.

In some embodiments, the aforementioned receiving module 1420 is further configured to receive downlink data.

In some embodiments, the apparatus further includes: a transmitting module 1430, configured to transmit uplink data.

It should be noted that, when implementing the functions of the apparatus provided in the foregoing embodiments, only the division of the foregoing functional modules is used as an example for illustration. In practical applications, the foregoing functions may be allocated to different functional modules for completion according to actual needs, that is, the internal structure of the device is divided into different functional modules, so as to complete all or part of the functions described above.

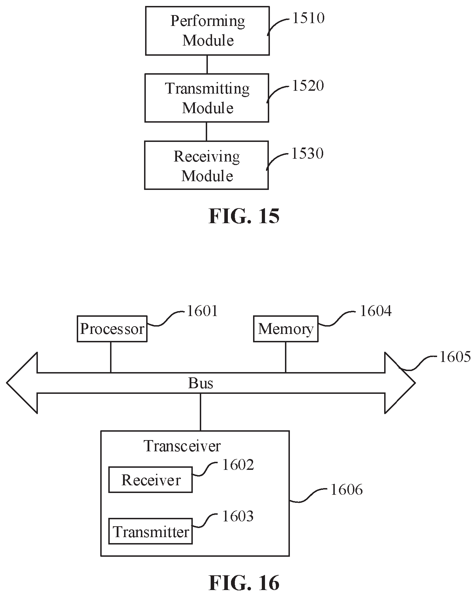

FIG. 15 illustrates a structural block diagram of a data transmission apparatus according to an exemplary embodiment of the present disclosure. The apparatus includes a performing module 1510.

The performing module 1510 is configured to perform, within a first time period, at least one of: transmitting downlink data to a terminal device, receiving uplink data transmitted by the terminal device, or transmitting a downlink control channel to the terminal device, in a case where a first constraint condition is satisfied.

In some embodiments, the first time period is a time period related to measurement of the terminal device.

In some embodiments, the first time period is a time period related to a time period related to RRM measurement; or the first time period is a time period related to NCSG; or the first time period is MG; or the first time period is VIL; or the first time period is ML.

In some embodiments, the first time period is a time period related to RRM measurement.

In some embodiments, the first time period includes at least one of the following: a measurement time period; or a processing time period associated with the measurement.

Optionally, the first time period includes a measurement time period. In a case where the first constraint condition is satisfied, at least one of the following is performed within the measurement time period: transmitting downlink data to the terminal device, receiving uplink data transmitted by the terminal device, or transmitting a downlink control channel to the terminal device.

In some embodiments, the measurement time period includes at least one of the following: MG; or ML.

In some embodiments, the measurement-related processing time period includes at least one of the following: first VIL; or second VIL.

In some embodiments, the first time period is a time period related to NCSG. Optionally, the NCSG-related time period includes at least one of ML, first VIL, or second VIL.

In some embodiments, the first time period further includes at least one of the following pre-agreed, pre-configured or pre-determined time periods: a time period during which uplink control information is not transmitted; a time period during which SRS is not transmitted; a time period during which downlink data is not received; a time period during which uplink data is not transmitted; or a time period during which a downlink control channel is not monitored.

In some embodiments, in a case where the first constraint condition is satisfied, uplink control information transmitted by the terminal device and/or SRS transmitted by the terminal device is received within the first time period.

In some embodiments, the first constraint condition includes at least one of the following:
Condition 1: time-domain resources occupied by a first pre-configured transmission overlap or conflict with the first time period;
Condition 2: time-domain resources occupied by a first channel overlap or conflict with the first time period;
Condition 3: an interval between a time-domain position of a second channel carrying first information and a time-domain position of the first time period is greater than or equal to a predetermined value.

### For Condition 1:

In some embodiments, the type of data transmission to which Condition 1 applies is semi-persistent transmission. It may be determined whether to enable data transmission within the first time period without introducing additional signaling indication.

In some embodiments, in a case where time-domain resources occupied by the first pre-configured transmission overlap or conflict with the first time period, at least one of the following is performed within the first time period: transmitting downlink data to the terminal device, receiving uplink data transmitted by the terminal device, or transmitting a downlink control channel to the terminal device. Optionally, the time-domain resources occupied by the first pre-configured transmission completely overlap or conflict with the first time period. Optionally, the time-domain resources occupied by the first pre-configured transmission partially overlap or conflict with the first time period.

In some embodiments, in a case where time-domain resources occupied by the first pre-configured transmission include time-domain resources in the first time period, at least one of the following is performed within the first time period: transmitting downlink data to the terminal device, receiving uplink data transmitted by the terminal device, or transmitting a downlink control channel to the terminal device.

In some embodiments, in a case where at least one time-domain resource in the first time period is configured for transmission of the first pre-configured transmission, at least one of the following is performed within the first time period: transmitting downlink data to the terminal device, receiving uplink data transmitted by the terminal device, or transmitting a downlink control channel to the terminal device.

In some embodiments, the first pre-configured transmission includes at least one of the following: a periodic transmission channel; a periodic transmission signal; an available channel among periodic transmission channels; or an available signal among periodic transmission signals.

In some embodiments, the periodic transmission channel and/or the periodic transmission signal are determined according to high-layer signaling.

In some embodiments, the periodic transmission channel includes at least one of the following: SPS PDSCH; CG PUSCH; or PUCCH carrying feedback acknowledgement information corresponding to the SPS PDSCH.

In some embodiments, the periodic transmission signal refers to a signal carried on a periodic transmission channel, including at least one of the following: a signal carried on SPS PDSCH, a signal carried on CG PUSCH, or a signal carried on PUCCH carrying feedback acknowledgement information corresponding to the SPS PDSCH.

In some embodiments, the available channel among periodic transmission channels includes at least one of the following: SPS PDSCH corresponding to a first SPS configuration; CG PUSCH corresponding to a first CG configuration; first SPS PDSCH; first CG PUSCH; second SPS PDSCH among multiple overlapping SPS PDSCHs; or second CG PUSCH among multiple overlapping CG PUSCHs.

In some embodiments, the available signal among periodic transmission signals refers to a signal carried on an available channel among periodic transmission channels.

In some embodiments, the available channel among periodic transmission channels is a channel satisfying a second constraint condition among periodic transmission channels.

In some embodiments, the channel satisfying the second constraint condition includes at least one of the following: a channel indicated by configuration information as allowed, permitted, authorized or enabled for transmission within the first time period; a channel in which occupied symbols do not include an unavailable symbol; a channel satisfying an available condition among multiple overlapping channels.

In some embodiments, the available channel among periodic transmission channels is a channel indicated by configuration information as allowed, permitted, authorized or enabled for transmission within the first time period, including SPS PDSCH corresponding to the first SPS configuration and/or CG PUSCH corresponding to the first CG configuration.

The apparatus further includes a transmitting module 1520, configured to transmit configuration information. In some embodiments, the configuration information is transmitted by a network device for each CG configuration separately. That is, for each CG configuration, it is configured whether CG PUSCH corresponding to the CG configuration is allowed, permitted, authorized or enabled for transmission within the first time period. In some embodiments, the configuration information is transmitted by the network device for each SPS configuration separately. That is, for each SPS configuration, it is configured whether SPS PDSCH corresponding to the SPS configuration is allowed, permitted, authorized or enabled for transmission within the first time period.

In some embodiments, the configuration information is used to indicate at least one of the following information: the first pre-configured transmission is allowed, permitted, authorized or enabled for transmission within the first time period; or the first pre-configured transmission corresponds to a first priority.

In some embodiments, the configuration information is used to indicate that the first pre-configured transmission is allowed, permitted, authorized or enabled for transmission within the first time period.

The transmitting module 1520 is configured to transmit first configuration information. The first configuration information is used to indicate that SPS PDSCH corresponding to the first SPS configuration is allowed, permitted, authorized or enabled for transmission within the first time period.

Optionally, the first configuration information is used to indicate that SPS PDSCH corresponding to the first SPS configuration may be transmitted in MG. That is, the first configuration information may be understood as a switch corresponding to a transmission function or a switch corresponding to transmission within a measurement time period. For example, in a case where the first configuration information is received, SPS PDSCH corresponding to the first SPS configuration may be transmitted in MG; in a case where the first configuration information is not received, SPS PDSCH corresponding to the first SPS configuration may not be transmitted in MG. For another example, in a case where the first configuration information is received and indicates "allowed, permitted, authorized or enabled", SPS PDSCH corresponding to the first SPS configuration may be transmitted in MG; in a case where the first configuration information is received and indicates "not allowed, not permitted, unauthorized or disabled", SPS PDSCH corresponding to the first SPS configuration can be transmitted in MG.

Optionally, the first configuration information corresponds to a target MG, and the first configuration information is used to indicate that SPS PDSCH corresponding to the first SPS configuration may be transmitted in the target MG.

Optionally, the first configuration information is used to indicate in which MG or MGs the SPS PDSCH corresponding to the first SPS configuration may be transmitted. That is, there are multiple types of MGs, such as multiple MG opportunities at different times corresponding to one set of MG configurations, or multiple MG opportunities corresponding to multiple sets of MG configurations. A specific MG opportunity identifier or MG configuration identifier may be indicated in the first SPS configuration information.

The transmitting module 1520 is configured to transmit second configuration information. The second configuration information is used to indicate that CG PUSCH corresponding to the first CG configuration is allowed, permitted, authorized or enabled for transmission within the first time period.

Optionally, the second configuration information is used to indicate that CG PUSCH corresponding to the first CG configuration may be transmitted in MG. That is, the second configuration information may be understood as a switch corresponding to a transmission function or a switch corresponding to transmission within a measurement time period. For example, in a case where the first configuration information is received, CG PUSCH corresponding to the first CG configuration may be transmitted in MG; in a case where the first configuration information is not received, CG PUSCH corresponding to the first CG configuration may not be transmitted in MG. For another example, in a case where the first configuration information is received and indicates "allowed, permitted, authorized or enabled", CG PUSCH corresponding to the first CG configuration may be transmitted in MG; in a case where the first configuration information is received and indicates "not allowed, not permitted, unauthorized or disabled", CG PUSCH corresponding to the first CG configuration can be transmitted in MG.

Optionally, the second configuration information corresponds to a target MG, and the second configuration information is used to indicate that CG PUSCH corresponding to the first CG configuration is allowed, permitted, authorized or enabled for transmission within the target MG.

Optionally, the second configuration information is used to indicate in which MG or MGs the CG PUSCH corresponding to the first CG configuration may be transmitted. That is, there are multiple types of MGs, such as multiple MG opportunities at different times corresponding to one set of MG configurations, or multiple MG opportunities corresponding to multiple sets of MG configurations. A specific MG opportunity identifier or MG configuration identifier may be indicated in the first CG configuration information.

In some embodiments, the configuration information is used to indicate a first priority corresponding to the first pre-configured transmission. The first priority is higher than a second priority corresponding to the first time period.

The transmitting module 1520 is configured to transmit third configuration information. The third configuration information is used to indicate a first priority corresponding to one, several or all first pre-configured transmissions, and when the first priority is higher than the second priority corresponding to the first time period, data transmission or downlink control channel monitoring is performed within the first time period. If the first priority is equal to or lower than the second priority corresponding to the first time period, data transmission or downlink control channel monitoring is not performed within the first time period.

In the embodiments of the present disclosure, how to perform data transmission within the first time period is determined through indication of configuration information, so that high-priority data transmission can be performed within the first time period, thereby ensuring that impact on measurement is reduced as much as possible.

In some embodiments, the available channel among periodic transmission channels is a channel in which occupied symbols do not include an unavailable symbol, including first SPS PDSCH and/or first CG PUSCH. The first SPS PDSCH should be understood as one SPS PDSCH among multiple SPS PDSCHs. The first CG PUSCH should be understood as one CG PUSCH among multiple CG PUSCHs.

In some embodiments, symbols occupied by the first SPS PDSCH do not include at least one of the following: uplink symbol(s); or flexible symbol(s).

The uplink symbol(s) and/or flexible symbol(s) is/are unavailable symbol(s). The terminal device can perform uplink transmission on the uplink symbol(s). The terminal device can perform uplink transmission and/or downlink transmission on the flexible symbol(s).

Optionally, in a case where symbols occupied by one SPS PDSCH include uplink symbol(s) and/or flexible symbol(s), the SPS PDSCH is an unavailable SPS PDSCH. Optionally, in a case where symbols occupied by one SPS PDSCH do not include uplink symbol(s) or flexible symbol(s), the SPS PDSCH is an available SPS PDSCH.

Optionally, in a case where symbols occupied by one SPS PDSCH include uplink symbol(s) and/or flexible symbol(s), the SPS PDSCH is an unavailable SPS PDSCH. Optionally, in a case where symbols occupied by one SPS PDSCH only include downlink symbol(s), the SPS PDSCH is an available SPS PDSCH.

Optionally, in a case where symbols occupied by one SPS PDSCH include uplink symbol(s), the SPS PDSCH is an unavailable SPS PDSCH. Optionally, when symbols occupied by one SPS PDSCH include downlink symbol(s) and/or flexible symbol(s), the SPS PDSCH is an available SPS PDSCH.

In some embodiments, symbols occupied by the first CG PUSCH do not include at least one of the following: downlink symbol(s); symbol(s) occupied by SSB; or flexible symbol(s). The downlink symbol(s) and/or symbol(s) occupied by SSB and/or flexible symbol(s) are unavailable symbols. The terminal device can perform downlink transmission on the downlink symbol(s).

Optionally, in a case where symbols occupied by one CG PUSCH include downlink symbol(s) and/or symbol(s) occupied by SSB and/or flexible symbol(s), the CG PUSCH is an unavailable CG PUSCH. Optionally, in a case where symbols occupied by one CG PUSCH do not include downlink symbol(s) and/or symbol(s) occupied by SSB and/or flexible symbol(s), the CG PUSCH is an available CG PUSCH.

Optionally, in a case where symbols occupied by one CG PUSCH include uplink symbol(s) and/or flexible symbol(s), the CG PUSCH is an unavailable CG PUSCH. Optionally, in a case where symbols occupied by one CG PUSCH only include downlink symbol(s), the CG PUSCH is an available CG PUSCH.

Optionally, in a case where symbols occupied by one CG PUSCH include uplink symbol(s), the CG PUSCH is an unavailable CG PUSCH. Optionally, in a case where symbols occupied by one CG PUSCH include downlink symbol(s) and/or flexible symbol(s), the CG PUSCH is an available CG PUSCH.

In some embodiments, the available channel among periodic transmission channels is a channel satisfying an available condition among multiple overlapping channels, including second SPS PDSCH among multiple overlapping SPS PDSCHs and/or second CG PUSCH among multiple overlapping CG PUSCHs. The second SPS PDSCH should be understood as one SPS PDSCH among multiple SPS PDSCHs. The second CG PUSCH should be understood as one CG PUSCH among multiple CG PUSCHs.

In some embodiments, the second SPS PDSCH among multiple overlapping SPS PDSCHs includes at least one of the following: SPS PDSCH corresponding to a first priority; SPS PDSCH corresponding to a first number; SPS PDSCH whose starting symbol satisfies a first condition; SPS PDSCH whose carried TBS satisfies a second condition; or SPS PDSCH whose number of occupied symbols is a first value.

Optionally, the SPS PDSCH corresponding to the first priority is the SPS PDSCH with the highest priority among multiple overlapping SPS PDSCHs. Or it may be understood that the SPS PDSCH corresponding to the first priority is the SPS PDSCH with the first-ranked priority among multiple overlapping SPS PDSCHs. Optionally, the SPS PDSCH corresponding to the first priority is the SPS PDSCH with the smallest priority value among multiple overlapping SPS PDSCHs. Optionally, the SPS PDSCH corresponding to the first priority is the SPS PDSCH whose priority is at a target position among multiple overlapping SPS PDSCHs. For example, the SPS PDSCH corresponding to the first priority is the SPS PDSCH with the second-ranked priority among multiple overlapping SPS PDSCHs.

Optionally, the SPS PDSCH corresponding to the first number is the SPS PDSCH with the largest number among multiple overlapping SPS PDSCHs. Or it may be understood that the SPS PDSCH corresponding to the first number is the SPS PDSCH with the first-ranked number among multiple overlapping SPS PDSCHs. Optionally, the SPS PDSCH corresponding to the first number is the SPS PDSCH with the smallest number among multiple overlapping SPS PDSCHs. Or it may be understood that the SPS PDSCH corresponding to the first number is the SPS PDSCH with the last-ranked number among multiple overlapping SPS PDSCHs. Optionally, the SPS PDSCH corresponding to the first number is the SPS PDSCH whose number is at a target position among multiple overlapping SPS PDSCHs. For example, the SPS PDSCH corresponding to the first number is the SPS PDSCH with the second-ranked number among multiple overlapping SPS PDSCHs.

Optionally, the SPS PDSCH whose starting symbol satisfies the first condition is the SPS PDSCH with the earliest starting symbol among multiple overlapping SPS PDSCHs. Optionally, the SPS PDSCH whose starting symbol satisfies the first condition is the SPS PDSCH with the latest starting symbol among multiple overlapping SPS PDSCHs.

Optionally, the SPS PDSCH whose carried TBS satisfies the second condition is the SPS PDSCH with the largest carried TBS among multiple overlapping SPS PDSCHs. Optionally, the SPS PDSCH whose carried TBS satisfies the second condition is the SPS PDSCH with the smallest carried TBS among multiple overlapping SPS PDSCHs.

Optionally, the SPS PDSCH whose number of occupied symbols is the first value is the SPS PDSCH with the largest number of occupied symbols among multiple overlapping SPS PDSCHs. Optionally, the SPS PDSCH whose number of occupied symbols is the first value is the SPS PDSCH with the smallest number of occupied symbols among multiple overlapping SPS PDSCHs.

In some embodiments, the second CG PUSCH among multiple overlapping CG PUSCHs includes at least one of the following: CG PUSCH corresponding to a second priority; CG PUSCH corresponding to a second number; CG PUSCH whose starting symbol satisfies a third condition; CG PUSCH whose carried TBS satisfies a fourth condition; CG PUSCH whose number of occupied symbols is a second value.

Optionally, the CG PUSCH corresponding to the second priority is the CG PUSCH with the highest priority among multiple overlapping CG PUSCHs. Or it may be understood that the CG PUSCH corresponding to the second priority is the CG PUSCH with the first-ranked priority among multiple overlapping CG PUSCHs. Optionally, the CG PUSCH corresponding to the second priority is the CG PUSCH with the smallest priority value among multiple overlapping CG PUSCHs. Optionally, the CG PUSCH corresponding to the second priority is the CG PUSCH whose priority is at a target position among multiple overlapping CG PUSCHs. For example, the CG PUSCH corresponding to the second priority is the CG PUSCH with the second-ranked priority among multiple overlapping CG PUSCHs.

Optionally, the CG PUSCH corresponding to the second number is the CG PUSCH with the largest number among multiple overlapping CG PUSCHs. Or it may be understood that the CG PUSCH corresponding to the second number is the CG PUSCH with the first-ranked number among multiple overlapping CG PUSCHs. Optionally, the CG PUSCH corresponding to the second number is the CG PUSCH with the smallest number among multiple overlapping CG PUSCHs. Or it may be understood that the CG PUSCH corresponding to the second number is the CG PUSCH with the last-ranked number among multiple overlapping CG PUSCHs. Optionally, the CG PUSCH corresponding to the second number is the CG PUSCH whose number is at a target position among multiple overlapping CG PUSCHs. For example, the CG PUSCH corresponding to the second number is the CG PUSCH with the second-ranked number among multiple overlapping CG PUSCHs.

Optionally, the CG PUSCH whose starting symbol satisfies the third condition is the CG PUSCH with the earliest starting symbol among multiple overlapping CG PUSCHs. Optionally, the CG PUSCH whose starting symbol satisfies the third condition is the CG PUSCH with the latest starting symbol among multiple overlapping CG PUSCHs.

Optionally, the CG PUSCH whose carried TBS satisfies the fourth condition is the CG PUSCH with the largest carried TBS among multiple overlapping CG PUSCHs. Optionally, the CG PUSCH whose carried TBS satisfies the fourth condition is the CG PUSCH with the smallest carried TBS among multiple overlapping CG PUSCHs.

Optionally, the CG PUSCH whose number of occupied symbols is the second value is the CG PUSCH with the largest number of occupied symbols among multiple overlapping CG PUSCHs. Optionally, the CG PUSCH whose number of occupied symbols is the second value is the CG PUSCH with the smallest number of occupied symbols among multiple overlapping CG PUSCHs. Optionally, the CG PUSCH in which the number of occupied symbols is the second value is the CG PUSCH with the smallest number of occupied symbols among multiple overlapping CG PUSCHs.

In the embodiments of the present disclosure, by determining an available channel among periodic transmission channels, the first time period can be prevented from being affected by invalid channels; and only when the first pre-configured transmission is an available channel among periodic transmission channels, at least one of the following is performed within the first time period: transmitting downlink data to the terminal device, receiving uplink data transmitted by the terminal device, or transmitting a downlink control channel to the terminal device, thereby reducing impact on measurement as much as possible.

### For Condition 2:

In some embodiments, the type of data transmission to which Condition 2 applies is dynamic transmission.

In some embodiments, in a case where time-domain resources occupied by the first channel overlap or conflict with the first time period, at least one of the following is performed within the first time period: transmitting downlink data to the terminal device, receiving uplink data transmitted by the terminal device, or transmitting a downlink control channel to the terminal device.

In some embodiments, in a case where time-domain resources occupied by the first channel include time-domain resources in the first time period, at least one of the following is performed within the first time period: transmitting downlink data to the terminal device, receiving uplink data transmitted by the terminal device, or transmitting a downlink control channel to the terminal device.

In some embodiments, in a case where time-domain resources in the first time period include time-domain resources occupied by the first channel, at least one of the following is performed within the first time period: transmitting downlink data to the terminal device, receiving uplink data transmitted by the terminal device, or transmitting a downlink control channel to the terminal device.

In some embodiments, the first channel is indicated by first DCI transmitted before the first time period. In some embodiments, the channel carrying the first DCI includes PDCCH.

The transmitting module 1520 is configured to transmit first DCI. The first DCI is used to indicate transmission of the first channel.

In some embodiments, the first channel includes at least one of PDSCH, PUSCH, or PUCCH.

In the embodiments of the present disclosure, whether to perform data transmission within the first time period is determined by using existing first DCI, and there is no need to design new DCI or introduce a new information field in DCI, which helps reduce waste of signaling resources.

In some embodiments, time-domain resources occupied by the first channel completely overlap or conflict with the first time period.

In some embodiments, time-domain resources occupied by the first channel partially overlap or conflict with the first time period.

### For Condition 3:

In some embodiments, in a case where an interval between a time-domain position of a second channel carrying first information and a time-domain position of the first time period is greater than or equal to a predetermined value, at least one of the following is performed within the first time period: transmitting downlink data to the terminal device, receiving uplink data transmitted by the terminal device, or transmitting a downlink control channel to the terminal device.

The transmitting module 1520 is configured to transmit first information. The first information is used to indicate that the apparatus performs, within the first time period, at least one of: transmitting downlink data to the terminal device, receiving uplink data transmitted by the terminal device, or transmitting a downlink control channel to the terminal device.

In some embodiments, the first information further includes at least one of the following information: identification information corresponding to the first time period; or information related to a time-domain position where the first time period is located.

Optionally, the identification information corresponding to the first time period is used to indicate the terminal device to determine the first time period from multiple time periods. Optionally, the identification information corresponding to the first time period is used to indicate the terminal device to determine a first time period corresponding to a target measurement configuration from time periods corresponding to multiple measurement configurations. There is a one-to-one correspondence or many-to-one correspondence between the multiple time periods and the multiple measurement configurations. For example, in a case where the terminal device has multiple sets of measurement configurations, each set of measurement configurations corresponding to one MG, the identification information corresponding to the first time period is used to determine a target MG from multiple MGs.

In some embodiments, the first information further includes a measurement configuration identifier corresponding to a measurement configuration, and the measurement configuration identifier is used to indicate the terminal device to determine the first time period from time periods corresponding to multiple measurement configurations.

Optionally, the related information of the time-domain position where the first time period is located is time window information, and the time window information includes at least two of a starting time-domain position, an ending time-domain position, or a time-domain length of the time window.

In some embodiments, at least one of the following is performed within all or part of the first time period within the time window: transmitting downlink data to the terminal device, receiving uplink data transmitted by the terminal device, or transmitting a downlink control channel to the terminal device.

In some embodiments, the first time period is all or part of a measurement-related time period within the time window.

In some embodiments, the first time period is all or part of a measurement-related time period that overlaps the time window.

In some embodiments, the first time period is one or more measurement time periods within the time window corresponding to a first measurement configuration, and the first measurement configuration is one or more of all pre-configured or indicated measurement configurations.

In some embodiments, the related information of the time-domain position where the first time period is located is used to indicate the terminal device to determine n time periods within the time window, the first time period is a time period set formed by a combination of the n time periods, and n is a positive integer. In some embodiments, the n time periods are all measurement-related time periods within the time window. In some embodiments, the n time periods are part of measurement-related time periods within the time window, and optionally, the part of time periods are time periods indicated by a measurement configuration.

Taking the n time periods being all measurement-related time periods within the time-domain position where the first time period is located as an example, as shown in FIG. 10, in a case where the first information includes information related to the time-domain position where the first time period is located, the time window is determined based on the information related to the time-domain position where the first time period is located. As shown in FIG. 10, the time window is determined based on the information related to the time-domain position where the first time period is located, and in a case where the time window includes MG1, MG2 and MG3, the first time period is MG1, MG2 and MG3 within the time window.

In some embodiments, the interval between the time-domain position of the second channel carrying the first information and the time-domain position of the first time period being greater than or equal to the predetermined value includes at least one of the following two cases:
Case 1: an interval between a time-domain ending position of the second channel and a time-domain starting position of the first time period is greater than or equal to a first predetermined value; or
Case 2: an interval between a time unit where the time-domain ending position of the second channel is located and a time unit where the time-domain starting position of the first time period is located is greater than or equal to a second predetermined value.

In some embodiments, in a case where the interval between the time-domain ending position of the second channel and the time-domain starting position of the first time period is greater than or equal to the first predetermined value, at least one of transmitting downlink data to the terminal device, receiving uplink data transmitted by the terminal device, or transmitting a downlink control channel to the terminal device is performed within the first time period.

In some embodiments, the first predetermined value is N symbols, where N is a positive integer. Optionally, N is 4, 5, 7, 8 or 10. In some embodiments, the first predetermined value is determined according to capabilities of the terminal device.

As shown in FIG. 11, the time-domain position where the second channel 10 is located is composed of symbol 2, symbol 3 and symbol 4, the time-domain starting position of the second channel 10 is symbol 2, and the time-domain ending position is symbol 4. The time-domain position where the first time period 11 is located is composed of symbol 10, symbol 11, symbol 12 and symbol 13, where the time-domain starting position of the first time period 11 is symbol 10. The interval between the time-domain starting position of the first time period 11 and the time-domain ending position of the second channel 10 is 5 symbols, that is, the interval between the time-domain ending position of the second channel and the time-domain starting position of the first time period is greater than or equal to the first predetermined value.

In some embodiments, in a case where a starting symbol of the first time period is not earlier than the N-th symbol after an ending symbol of the second channel, at least one of the following is performed within the first time period: transmitting downlink data to the terminal device, receiving uplink data transmitted by the terminal device, or transmitting a downlink control channel to the terminal device.

In some embodiments, in a case where the interval between the time unit where the time-domain ending position of the second channel is located and the time unit where the time-domain starting position of the first time period is located is greater than or equal to the second predetermined value, at least one of the following is performed within the first time period: transmitting downlink data to the terminal device, receiving uplink data transmitted by the terminal device, or transmitting a downlink control channel to the terminal device. The time unit includes at least one of a subframe, a slot, or a subslot.

In some embodiments, the second predetermined value is M time units, where M is a positive integer. Optionally, M is 1, 2, 3 or 4. In some embodiments, the second predetermined value is determined according to capabilities of the terminal device.

Taking one time unit being one slot as an example. As shown in FIG. 12, the time unit where the time-domain position of the second channel 10 is located is slot 0, and the time unit where the time-domain position of the first time period 11 is located is slot 4. The interval between the time unit where the time-domain starting position of the first time period 11 is located and the time unit where the time-domain ending position of the second channel 10 is located is 2 slots (i.e., 2 time units), then the interval between the time unit where the time-domain ending position of the second channel is located and the time unit where the time-domain starting position of the first time period is located is greater than or equal to the second predetermined value. It should be understood that the time-domain ending position of the second channel is before the time-domain starting position of the first time period.

In the embodiments of the present disclosure, whether to perform data transmission within the first time period is determined through dynamic first information, and data transmission can be flexibly scheduled. The terminal device needs to reserve sufficient processing time to cancel the original measurement configuration.

In some embodiments, the first information is second DCI. The second channel carrying the second DCI is PDCCH.

In some embodiments, in a case where a value of a first information field in the second DCI is a first value, the second DCI is used to indicate the network device to perform, within a first time period, at least one of: transmitting downlink data to the terminal device, receiving uplink data transmitted by the terminal device, or transmitting a downlink control channel to the terminal device. For example, the first value is 1 or 0. Optionally, the first information field includes at least one of the following: a measurement gap deactivation information field or a measurement deactivation information field; a hybrid automatic repeat request (HARQ) process number information field; or a priority number information field.

In some embodiments, the first information field is a measurement gap deactivation information field or a measurement deactivation information field. The first information field is an independent information field. Using independent information increases overhead but simplifies algorithm implementation. In a case where a value of the measurement gap deactivation information field is the first value, the second DCI indicates the network device to perform, within a first time period, at least one of: transmitting downlink data to the terminal device, receiving uplink data transmitted by the terminal device, or transmitting a downlink control channel to the terminal device. In a case where a value of the measurement deactivation information field is the first value, the second DCI indicates the network device to perform, within a first time period, at least one of: transmitting downlink data to the terminal device, receiving uplink data transmitted by the terminal device, or transmitting a downlink control channel to the terminal device within the first time period.

In some embodiments, the first information field is a HARQ process number information field. In a case where a value of the HARQ process number information field is the first value, the second DCI indicates the network device to perform, within the first time period, at least one of: transmitting downlink data to the terminal device, receiving uplink data transmitted by the terminal device, or transmitting a downlink control channel to the terminal device. The first value is agreed by a protocol or pre-indicated by the network device through high-layer signaling. Using the HARQ process number information field does not introduce new overhead but has certain scheduling restrictions.

In some embodiments, the first information field is a priority number information field. In a case where a value of the priority number information field is the first value, the second DCI indicates the network device to perform, within the first time period, at least one of: transmitting downlink data to the terminal device, receiving uplink data transmitted by the terminal device, or transmitting a downlink control channel to the terminal device. The first value is agreed by a protocol or pre-indicated by the network device through high-layer signaling. Using the priority number information field does not introduce new overhead but has certain scheduling restrictions.

In some embodiments, when the second DCI is scrambled by using a first Radio Network Temporary Identifier (RNTI), the second DCI is used to indicate the network device to perform, within the first time period, at least one of: transmitting downlink data to the terminal device, receiving uplink data transmitted by the terminal device, or transmitting a downlink control channel to the terminal device. In some embodiments, the second DCI includes an RNTI for scrambling the second DCI. When the second DCI is scrambled by using the first RNTI, the second DCI is used to indicate the network device to perform, within the first time period, at least one of: transmitting downlink data to the terminal device, receiving uplink data transmitted by the terminal device, or transmitting a downlink control channel to the terminal device. Further, the second DCI may also be used to indicate scheduling of transmission of other channels. No DCI overhead is added, scheduling restrictions are small, but additional RNTI consumption is required.

In some embodiments, when the second DCI uses a first DCI format, the second DCI is used to indicate the network device to perform, within the first time period, at least one of: transmitting downlink data to the terminal device, receiving uplink data transmitted by the terminal device, or transmitting a downlink control channel to the terminal device.

In some embodiments, when the first information is DCI, a physical layer feeds back, reports or transmits an indication result of receiving downlink data, transmitting uplink data or monitoring a downlink control channel within the first time period to a high layer.

In some embodiments, the first information includes MAC CE. The second channel carrying the MAC CE is PDSCH. Using MAC CE does not increase physical layer overhead but results in slightly higher processing delay.

In some embodiments, the aforementioned transmitting module 1520 is further configured to transmit downlink data to the terminal device.

In some embodiments, the apparatus further includes: a receiving module 1530, configured to receive uplink data transmitted by the terminal device.

It should be noted that, when implementing the functions of the apparatus provided in the foregoing embodiments, only the division of the foregoing functional modules is used as an example for illustration. In practical applications, the foregoing functions may be allocated to different functional modules for completion according to actual needs, that is, the internal structure of the device is divided into different functional modules, so as to complete all or part of the functions described above.

FIG. 16 illustrates a schematic structural diagram of a communication device according to an embodiment of the present disclosure. The communication device may include: a processor 1601, a receiver 1602, a transmitter 1603, a memory 1604 and a bus 1605.

The processor 1601 includes one or more processing cores, and the processor 1601 executes various functional applications and information processing by running software programs and modules.

The receiver 1602 and the transmitter 1603 may be implemented as a transceiver 1606, and the transceiver 1606 may be a communication chip.

The memory 1604 is connected to the processor 1601 via the bus 1605. The memory 1604 may be configured to store a computer program, and the processor 1601 is configured to execute the computer program to implement each step performed by the terminal device or the network device in the foregoing method embodiments.

In addition, the memory 1604 may be implemented by any type of volatile or non-volatile storage device or a combination thereof, including but not limited to: RAM (Random-Access Memory), ROM (Read-Only Memory), EPROM (Erasable Programmable Read-Only Memory), EEPROM (Electrically Erasable Programmable Read-Only Memory), flash memory or other solid-state storage technologies, CD-ROM (Compact Disc Read-Only Memory), DVD (Digital Video Disc) or other optical storage, magnetic cassettes, magnetic tape, magnetic disk storage or other magnetic storage devices.

Embodiments of the present disclosure further provide a computer-readable storage medium, where a computer program is stored, and the computer program is executed by a processor of a terminal device to implement each step in the foregoing data transmission method. In some embodiments, the computer-readable storage medium may include: ROM (Read-Only Memory), RAM (Random-Access Memory), SSD (Solid State Drives), optical disk, etc. The RAM may include ReRAM (Resistance Random Access Memory) and DRAM (Dynamic Random Access Memory).

Embodiments of the present disclosure further provide a chip, where the chip includes a programmable logic circuit and/or program instructions, and when the chip runs on a terminal device/network device, the chip is configured to implement each step in the foregoing data transmission method.

Embodiments of the present disclosure further provide a computer program product or computer program, where the computer program product or computer program includes computer instructions, the computer instructions are stored in a computer-readable storage medium, and a processor of a terminal device/network device reads and executes the computer instructions from the computer-readable storage medium to implement each step in the foregoing data transmission method.

Those skilled in the art should appreciate that the functions described in the embodiments of the present disclosure may be implemented by hardware, software, firmware or any combination thereof in one or more of the foregoing examples. When implemented by software, these functions may be stored in a computer-readable medium or transmitted as one or more instructions or codes on a computer-readable medium. Computer-readable media includes computer storage media and communication media including any medium that facilitates transfer of a computer program from one place to another. A storage media may be any available media that can be accessed by a general purpose or special purpose computer.

The foregoing descriptions are merely exemplary embodiments of the present disclosure and are not intended to limit the present disclosure. Any modifications, equivalent replacements, improvements, etc. made within the spirit and principles of the present disclosure shall be included within the protection scope of the present disclosure.

## Claims

1. A data transmission method, performed by a terminal device, and comprising:
in a case where a first constraint condition is satisfied, performing, within a first time period, at least one of: receiving downlink data, transmitting uplink data, or monitoring a downlink control channel, wherein the first time period is a time period related to measurement.

2. The method according to claim 1, wherein
the first time period is a time period related to Radio Resource Management (RRM) measurement; or
the first time period is a time period related to Network Controlled Small Gap (NCSG); or
the first time period is Measurement Gap (MG); or
the first time period is Visible Interruption Length (VIL); or
the first time period is Measurement Length (ML).

3. The method according to claim 1 or 2, wherein the first constraint condition comprises at least one of the following:
time-domain resources occupied by a first pre-configured transmission overlap or conflict with the first time period;
time-domain resources occupied by a first channel overlap or conflict with the first time period, wherein the first channel is indicated by first Downlink Control Information (DCI) received before the first time period; or
an interval between a time-domain position of a second channel carrying first information and a time-domain position of the first time period is greater than or equal to a predetermined value, wherein the first information is used to indicate the terminal device to perform, within the first time period, at least one of: receiving downlink data, transmitting uplink data, or monitoring the downlink control channel.

4. The method according to claim 3, wherein the first pre-configured transmission comprises at least one of the following:
a periodic transmission channel; a periodic transmission signal; an available channel in the periodic transmission channel; or an available signal in the periodic transmission signal.

5. The method according to claim 3, further comprising:
receiving configuration information,
wherein the configuration information is used to indicate at least one of the following information: the first pre-configured transmission is allowed to be transmitted within the first time period; or a first priority corresponding to the first pre-configured transmission, wherein the first priority is higher than a second priority corresponding to the first time period.

6. The method according to claim 3, wherein the first channel comprises at least one of the following:
Physical Downlink Shared Channel (PDSCH); Physical Uplink Shared Channel (PUSCH); or Physical Uplink Control Channel (PUCCH).

7. The method according to claim 3, wherein the first information is second DCI;
when a value of a first information field in the second DCI is a first value, the second DCI is used to indicate the terminal device to perform, within the first time period, at least one of: receiving downlink data, transmitting uplink data, or monitoring the downlink control channel; or
when the second DCI is scrambled by using a first Radio Network Temporary Identifier (RNTI), the second DCI is used to indicate the terminal device to perform, within the first time period, at least one of: receiving downlink data, transmitting uplink data, or monitoring a downlink control channel; or
when the second DCI uses a first DCI format, the second DCI is used to indicate the terminal device to perform, within the first time period, at least one of the following: receiving downlink data, transmitting uplink data, or monitoring a downlink control channel.

8. The method according to claim 7, wherein the first information field comprises at least one of the following:
a measurement gap deactivation information field or a measurement deactivation information field; a Hybrid Automatic Repeat Request (HARQ) process number information field; or a priority number information field.

9. The method according to claim 3, wherein the first information is a Medium Access Control (MAC) Control Element (CE).

10. The method according to claim 3, wherein the first information further comprises at least one of the following information:
identification information corresponding to the first time period; or information related to a time-domain position where the first time period is located.

11. The method according to claim 3, wherein the interval between the time-domain position of the second channel carrying the first information and the time-domain position of the first time period being greater than or equal to the predetermined value comprises:
an interval between a time-domain ending position of the second channel and a time-domain starting position of the first time period being greater than or equal to a first predetermined value; or
an interval between a time unit where the time-domain ending position of the second channel is located and a time unit where the time-domain starting position of the first time period is located being greater than or equal to a second predetermined value.

12. The method according to claim 11, wherein the first predetermined value is N symbols, wherein N is a positive integer.

13. The method according to claim 12, wherein a value of N is 4, 5, 7, 8 or 10.

14. The method according to claim 11, wherein the second predetermined value is M time units, wherein M is a positive integer.

15. The method according to claim 14, wherein a value of M is 1, 2, 3 or 4.

16. The method according to any one of claims 1 to 15, further comprising:
abandoning or canceling measurement within the first time period; or
abandoning or canceling measurement associated with the first time period; or
abandoning or canceling measurement within a second time period associated with the first time period.

17. The method according to any one of claims 1 to 16, further comprising:
transmitting uplink control information and/or transmitting a Sounding Reference Signal (SRS), within the first time period.

18. A data transmission method, performed by a network device, and comprising:
in a case where a first constraint condition is satisfied, performing, within a first time period, at least one of: transmitting downlink data to a terminal device, receiving uplink data transmitted by the terminal device, or transmitting a downlink control channel to the terminal device, wherein the first time period is a time period related to measurement of the terminal device.

19. The method according to claim 18, wherein
the first time period is a time period related to Radio Resource Management (RRM) measurement; or
the first time period is a time period related to Network Controlled Small Gap (NCSG); or
the first time period is Measurement Gap (MG); or
the first time period is Visible Interruption Length (VIL); or
the first time period is Measurement Length (ML).

20. The method according to claim 18 or 19, wherein the first constraint condition comprises at least one of the following:
time-domain resources occupied by a first pre-configured transmission overlap or conflict with the first time period;
time-domain resources occupied by a first channel overlap or conflict with the first time period, wherein the first channel is indicated by first DCI transmitted before the first time period; or
an interval between a time-domain position of a second channel carrying first information and a time-domain position of the first time period is greater than or equal to a predetermined value, wherein the first information is used to indicate the network device to perform, within the first time period, at least one of: transmitting downlink data to the terminal device, receiving uplink data transmitted by the terminal device, or transmitting a downlink control channel to the terminal device.

21. The method according to claim 20, wherein the first pre-configured transmission comprises at least one of the following:
a periodic transmission channel; a periodic transmission signal; an available channel in the periodic transmission channel; or an available signal in the periodic transmission signal.

22. The method according to claim 20, further comprising:
transmitting configuration information,
wherein the configuration information is used to indicate at least one of the following information: the first pre-configured transmission is allowed to be transmitted within the first time period; or a first priority corresponding to the first pre-configured transmission, wherein the first priority is higher than a second priority corresponding to the first time period.

23. The method according to claim 20, wherein the first channel comprises at least one of the following:
Physical Downlink Shared Channel (PDSCH); Physical Uplink Shared Channel (PUSCH); or Physical Uplink Control Channel (PUCCH).

24. The method according to claim 20, wherein the first information is second DCI;
when a first information field in the second DCI indicates a first value, the second DCI is used to indicate the network device to perform, within the first time period, at least one of: transmitting downlink data to the terminal device, receiving uplink data transmitted by the terminal device, or transmitting a downlink control channel to the terminal device; or
when the second DCI is scrambled by using a first Radio Network Temporary Identifier (RNTI), the second DCI is used to indicate the network device to perform, within the first time period, at least one of: transmitting downlink data to the terminal device, receiving uplink data transmitted by the terminal device, or transmitting a downlink control channel to the terminal device within the first time period; or
when the second DCI uses a first DCI format, the second DCI is used to indicate the network device to perform, within the first time period, at least one of: transmitting downlink data to the terminal device, receiving uplink data transmitted by the terminal device, or transmitting a downlink control channel to the terminal device.

25. The method according to claim 24, wherein the first information field comprises at least one of the following:
a measurement gap deactivation information field or a measurement deactivation information field; a Hybrid Automatic Repeat Request (HARQ) process number information field; or a priority number information field.

26. The method according to claim 20, wherein the first information is a Medium Access Control (MAC) Control Element (CE).

27. The method according to claim 20, wherein the first information further comprises at least one of the following information:
identification information corresponding to the first time period; or information related to a time-domain position where the first time period is located.

28. The method according to claim 20, wherein the interval between the time-domain position of the second channel carrying the first information and the time-domain position of the first time period being greater than or equal to a predetermined value comprises:
an interval between a time-domain ending position of the second channel and a time-domain starting position of the first time period being greater than or equal to a first predetermined value; or
an interval between a time unit where the time-domain ending position of the second channel is located and a time unit where the time-domain starting position of the first time period is located being greater than or equal to a second predetermined value.

29. The method according to claim 28, wherein the first predetermined value is N symbols, wherein N is a positive integer.

30. The method according to claim 29, wherein a value of N is 4, 5, 7, 8 or 10.

31. The method according to claim 28, wherein the second predetermined value is M time units, wherein M is a positive integer.

32. The method according to claim 31, wherein a value of M is 1, 2, 3 or 4.

33. The method according to any one of claims 18 to 32, further comprising:
receiving uplink control information transmitted by the terminal device and/or receiving SRS transmitted by the terminal device, within the first time period.

34. A data transmission apparatus, comprising:
a performing module, configured to performing, within a first time period, at least one of: receiving downlink data, transmitting uplink data, or monitoring a downlink control channel, in a case where a first constraint condition is satisfied, wherein the first time period is a time period related to measurement.

35. A data transmission apparatus, wherein the apparatus comprises:
a performing module, configured to perform, within a first time period, at least one of: transmitting downlink data to a terminal device, receiving uplink data transmitted by the terminal device, or transmitting a downlink control channel to the terminal device, in a case where a first constraint condition is satisfied, wherein the first time period is a time period related to measurement of the terminal device.

36. A communication device, comprising:
a processor;
a transceiver connected to the processor;
a memory storing executable instructions for the processor;
wherein the processor is configured to load and execute the executable instructions to implement the data transmission method according to any one of claims 1 to 33.

37. A computer-readable storage medium, wherein
a computer program is stored in the storage medium, and the computer program is configured to be executed by a processor to implement the data transmission method according to any one of claims 1 to 33.

38. A chip, comprising a programmable logic circuit and/or program instructions, and the chip, when running on a terminal device, is configured to implement the data transmission method according to any one of claims 1 to 33.

39. A computer program product, comprising computer instructions, stored in a computer-readable storage medium;
a processor of a communication device is configured to read the computer instructions from the computer-readable storage medium and execute the computer instructions, to enable the communication device to implement the data transmission method according to any one of claims 1 to 33.

40. A computer program, wherein the computer program is configured to be executed by a processor of a communication device to implement the data transmission method according to any one of claims 1 to 33.
